# EUROPÄISCHE PATENTSCHRIFT

(11) **EP 2 844 955 B1**
(45) Veröffentlichungstag und Bekanntmachung des Hinweises auf die Patenterteilung: **11.05.2016**
(21) Anmeldenummer: 13719849.5
(22) Anmeldetag: 30.04.2013
(51) Int. Cl.: G01D 5/347, G01D 5/14

(54) **ENERGIEAUTARKER MULTITURN-DREHGEBER UND VERFAHREN ZUR ERMITTLUNG EINER EINDEUTIGEN POSITION EINER GEBERWELLE MIT DEM MULTITURN-DREHGEBER**
ENERGY-AUTONOMOUS MULTIPLE TURN ROTATION SENSOR AND METHOD OF DETERMINING AN UNAMBIGUOUS POSITION OF A DRIVE SHAFT WITH THE MULTIPLE TURN ROTATION SENSOR
CAPTEUR DE ROTATION MULTI-TOURS AUTOSUFFISANT EN ÉNERGIE ET PROCÉDÉ DE DÉTERMINATION SANS AMBIGUÏTÉ LA POSITION D'UN ARBRE CAPTEUR AVEC LE CAPTEUR DE ROTATION MULTI-TOURS

(30) Priorität: 30.04.2012 DE 102012008888; 30.04.2012 DE 102012017071
(43) Veröffentlichungstag der Anmeldung: 11.03.2015
(73) Patentinhaber: Fritz Kübler GmbH Zähl-und Sensortechnik, 78054 Villingen-Schwenningen (DE)
(72) Erfinder: GEHRINGER, Stephan, 78655 Dunningen (DE); PALCZYNSKI, Juergen, 78056 Villingen-Schwenningen (DE); STEINER, Viktor, 78532 Tuttlingen (DE)
(74) Vertreter: Witte, Weller & Partner Patentanwälte mbB
(86) Internationale Anmeldenummer: PCT/EP2013/059043
(87) Internationale Veröffentlichungsnummer: WO 2013/164361

(56) Entgegenhaltungen:
- EP-A1- 0 557 265
- EP-A2- 2 221 587
- DE-A1-102007 039 051

## Beschreibung

Die vorliegende Erfindung betrifft einen Multiturn-Drehgeber (nachfolgend auch kurz als "MT-Drehgeber" bezeichnet) zur Erfassung sowohl einer fein aufgelösten bzw. Feinposition (absoluter Winkel innerhalb einer 360°-Umdrehung) als auch einer Anzahl ganzer bzw. vollständiger 360°-Umdrehungen (Umdrehungszählung). Außerdem betrifft die Erfindung ein Verfahren zur Ermittlung einer eindeutigen Position einer Geberwelle, die um eine Drehachse rotiert, mittels des energieautarken Multiturn-Drehgebers, der zur Erfassung der Anzahl von vollständig durchlaufenden 360°-Umdrehungen der rotierenden Geberwelle sowie zur Erfassung eines absoluten Drehwinkels eingerichtet ist, der eine fein aufgelöste Position innerhalb der 360°-Umdrehung der Geberwelle angibt, wobei an der Geberwelle ein Erregermagnet zur Erzeugung eines externen Magnetfelds drehfest befestigt ist, welches zumindest für eine Ermittlung der fein aufgelösten Position benutzt wird.

Ein derartiger Drehgeber und ein derartiges Verfahren sind aus der DE 10 2007 039 051 A1 bekannt.

Es sind mechanische MT-Drehgeber bekannt (z.B. DE 196 26 654 A1), bei denen mehrere Winkelcodierscheiben über ein Untersetzungsgetriebe miteinander verbunden sind. Eine jeweils nachgeschaltete Winkelcodierscheibe wird bei einer vollständigen Umdrehung einer vorgeschalteten Winkelcodierscheibe um eine ihrem Auflösungsvermögen entsprechende Einheit gedreht. Bei dieser Art von Drehgebern vervielfacht sich entsprechend der Anzahl der Codierscheiben auch eine Anzahl der Abtastsysteme. Für das Untersetzungsgetriebe ist eine hohe Präzision erforderlich. Diese Art von Drehgebern kann nur aufwändig montiert werden. Das Untersetzungsgetriebe ist nicht verschleißfrei und erlaubt nur begrenzte Drehzahlen.

Es sind auch MT-Drehgeber mit einer elektronischen Zähleinheit bekannt (z.B. EP 0 516 572 B1), bei denen anstelle des mechanischen Getriebes eine zusätzliche Codierscheibe eingesetzt wird, die mit der Geberwelle direkt verbunden ist und die dazu dient, die Anzahl der Umdrehungen der Geberwelle zu erfassen. Ein auf dieser zusätzlichen Codierscheibe befindlicher Code wird optisch ausgelesen und in Zellimpulse gewandelt, die an eine Zähleinheit weitergegeben werden. Zur Pufferung entsprechender Daten ist ein Akku oder eine Batterie zusammen mit der Zählereinheit im Drehgeber untergebracht. Da die permanente optische Auslesung der Codierscheiben verhältnismäßig viel Strom benötigt, weil eine Lichtquelle bei diesem Ausleseverfahren ständig bestromt werden muss, um keine Daten zu verlieren, fallen die Akkus bzw. Batterien relativ groß aus. Darum hat der Drehgeber selbst ebenfalls eine entsprechende Baugröße, wenn ein Akku oder eine Batterie eingesetzt werden soll, die eine brauchbare Daten-Pufferzeit von typischerweise mehreren Jahren voraussetzt. Ein solches optisches System ist des Weiteren auch für bestimmte harte Einsatzfälle nicht geeignet, bei denen hohe mechanische Stöße auftreten oder Kondenswasser-auslösende klimatische Bedingungen herrschen.

Das Dokument DE 10 2004 062 448 A1 offenbart einen Lenkwinkelsensor zur Bestimmung eines absoluten Lenkwinkels eines Fahrzeugs.

Weiterhin sind Umdrehungszähler bekannt, die bei einer abgeschalteten externen Versorgungsspannung eine kinetische Energie der Wellenbewegung in elektrische Energie umwandeln und daraus zumindest den Umdrehungszähler elektrisch speisen. Ein derartiges Verfahren, bei dem kinetische Energien in elektrische Energie umgewandelt werden, beruht auf dem sogenannten Wiegand-Effekt. Ein solcher Umdrehungszähler ist unter anderem in der DE 10 259 223 B3 gezeigt. Die DE 10 259 223 B3 zeigt einen energieautarken Umdrehungszähler auf Basis eines Wiegand-Sensors. Bei dieser vorbekannten Lösung werden nur ein Wiegand-Sensor und ein Dipolmagnet als Erregermagnet eingesetzt. Zusätzlich muss zwingend ein spezifischer Low-Power-Hallsensor oder eine zweite Induktionsspule für die Ermittlung einer Polarität des externen Magnetfelds eingesetzt werden. Außerdem werden teilweise zusätzliche Flussleitstücke eingesetzt. Diese Maßnahmen verteuern das System der DE 10 259 223 B3 erheblich. Der Hallsensor ist ein komplexes Schaltungsgebilde, das, nachdem ein Impuls im Wiegand-Sensor ausgelöst ist, typischerweise eine relativ lange Einschwingzeit bis zur vollständigen Funktionsbereitschaft zeigt. In dieser Zeit geht aber ein Teil der durch den sogenannten Wiegand-Impuls erzeugten Energie verloren, zum Beispiel in Form von Kriechströmen. Die DE 10 259 223 B3 zeigt keine detaillierte Gesamtlösung für einen Umdrehungszähler mit einem fein auflösenden Single-Turn-Sensor (nachfolgend auch kurz als "ST-Sensor" bezeichnet).

Das Dokument DE 34 08 478 C1 zeigt einen magneto-induktiven Inkrementalgeber, der energieautark mit sogenannten Wiegand- oder Impulsdrähten ausgestattet ist. Bei einer Rotation dieser Drähte am Außenumfang einer (Geber-)Welle, an der ein Erregermagnet befestigt ist, werden diese Drähte an dem Magneten vorbei bewegt, so dass eine schlagartige Ummagnetisierung der Impulsdrähte bewirkt wird. Diese Ummagnetisierung induziert eine entsprechende Spannung in einer Spule, die die Impulsdrähte umgibt. Durch eine Zählung der Wiegand- bzw. Ummagnetisierungs-Impulse kann eine Winkelstellung (absoluter Drehwinkel) und die Anzahl der vollständig durchlaufenden 360°-Umdrehungen ermittelt werden. Jedoch liefert dieses System beim erstmaligen Einschalten keine Absolutposition.

Einen absoluten MT-Drehgeber mit einer ST-Funktion (360°-auflösendes System) zeigt die EP 0 231 474 B1. Der MT-Drehgeber ist mit einem energieautarken Umdrehungszähler gekoppelt. Dies bedeutet, dass Sensoren, die zur Erfassung ganzer 360°-Umdrehungen geeignet sind, nicht extern mit Energie gespeist werden müssen. Nachteilig bei diesem System ist aber einerseits eine erforderliche Batterie zur Pufferung der Daten, während eine externe Versorgungsspannung abgeschaltet ist. Andererseits ist der relativ hohe sensorische Aufwand in Form von drei Wiegand-Sensoren nachteilig. Eine Schaltung, die zum Synchronisieren des ST mit dem MT benötigt wird, ist bei dieser Anordnung relativ aufwändig.

Eine gegenüber der EP 0 231 474 B1 verbesserte Lösung der vorgenannten Art zeigt die DE 44 07 474 C2. Bei der DE 44 07 474 C2 wird keine Batterie benötigt, da die Energie, die die Wiegand-Sensoren impulsartig abgeben, sowohl für das Erfassen und Zählen ganzer Umdrehungen als auch für das Sichern der Daten in einem FRAM-Speicher genutzt wird. Allerdings bleiben auch hier die anderen Nachteile bestehen, insbesondere die Tatsache, dass mehrere Wiegand-Drähte und/oder Magnete eingesetzt werden.

Generell besteht bei den herkömmlichen Lösungen das Problem, dass eine klare Anleitung zählt, wie die Sensoren zur Erfassung des absoluten Drehwinkels mit den Sensoren zur Erfassung der vollständigen Umdrehungen mit einem möglichst geringen Aufwand miteinander synchronisiert werden können. Bei der DE 10 259 223 B3 müssen der Hallsensor und der Wiegand-Sensor darüber hinaus in einem bestimmten Winkel zueinander angeordnet sein, was einen Montageaufwand erhöht und bei Temperaturschwankungen des Magneten, des Hallsensors und/oder des Wiegand-Sensors eine zuverlässige Funktion des Systems über einen weiten Temperaturbereich gefährdet.

Es ist daher eine Aufgabe der vorliegenden Erfindung, eine ganzheitliche Lösung vorzusehen, die einen fein auflösenden Singleturn und einen Multiturn zum Zählen vollständiger 360°-Umdrehungen inklusive eines geeigneten Synchronisationsverfahrens angibt, welches dafür sorgt, dass die zueinander nicht synchron verlaufenden Nulldurchgänge des Singleturns (ST) und des Multiturns (MT) synchronisiert werden.

Diese Aufgabe wird gelöst durch einen energieautarken Multiturndrehgeber gemäß Anspruch 1.

Gemäß einer bevorzugten Ausführungsform ist der Impulssensor ein Wiegand-Sensor.

Bei einer vorteilhaften Ausgestaltung ist der Magnetfeldsensor hochohmig und ist ein xMR-Element, insbesondere ein TMR-, AMR- oder GMR-Element.

Ferner ist es bevorzugt, wenn der Multiturn-Drehgeber einen Gleichrichter aufweist.

Insbesondere kann der Erregermagnet ein Permanentmagnet sein, insbesondere ein Dipol, der vorzugsweise zentrisch an der Geberwelle befestigt ist.

Vorzugsweise sind der Impulssensor und der Magnetfeldsensor koaxial zur Geberwelle und zum Erregermagneten angeordnet, dass der Impulssensor und der Magnetfeldsensor dem Erregermagneten axialer Richtung beabstandet gegenüberliegen, wenn die Geberwelle mit dem Multiturn-Drehgeber zusammengebaut ist.

Gemäß einer weiteren bevorzugten Ausführungsform können n Ummagnetisierungsimpulse für jede der 360°-Umdrehungen der Geberwelle erzeugt werden und jeder n-te Ummagnetisierungsimpuls eines Impulszyklus kann eine Aktualisierung eines Werts des Umdrehungszählerspeichers verursachen.

Bei einer vorteilhaften Ausgestaltung ist eine Orientierung des Magnetfeldsensors relativ zum Impulsdraht so gewählt, dass die Ummagnetisierungsimpulse jeweils im Wesentlichen mittig in den entsprechenden Quadranten liegen.

Ferner ist es bevorzugt, wenn der Multiturn-Drehgeber einen Energiespeicher aufweist, der mit dem Impulssensor elektrisch verbunden ist und der nur mit Energie geladen wird, die aus den Ummagnetisierungsimpulsen gewonnen wird.

Ferner wird diese Aufgabe durch ein Verfahren zur Ermittlung einer eindeutigen Position einer Geberwelle gemäß Anspruch 10 gelöst.

Vorzugsweise sind die spezifischen verbotenen Quadrantenzonen in einem Speicher der Auswerteeinheit oder in einem separaten Speicherelement hinterlegt.

Weiter vorzugsweise weist der Impulssensor einen, vorzugsweise einzigen, Impulsdraht und eine, vorzugsweise einzige, Spule auf, die den Impulsdraht umgibt, wobei der Impulsdraht einen äußeren Mantel und einen innerhalb des Mantels angeordneten Kern aufweist.

Ferner ist es bevorzugt, dass äußere Grenzen der verbotenen Quadrantenzonen durch Ummagnetisierungs-Zündschwellen des Kerns definiert sind.

Gemäß einer bevorzugten Ausführungsform weist der Impulssensor einen, vorzugsweise einzigen, Impulsdraht und eine, vorzugsweise einzige, Spule auf, die den Impulsdraht umgibt, und wobei der Schritt des Auswertens des Zusatzsignals und des Korrigierens des Umdrehungszählerwerts aufweist: Bestromen der Spule für eine kurze Zeitdauer, so dass dem externen Magnetfeld des Erregermagneten ein zusätzliches Magnetfeld überlagert wird und dadurch ein Test-Ummagnetisierungsimpuls im Impulsdraht erzeugbar ist, der anschließend mit der Spule messbar ist, wobei eine Existenz oder Nichtexistenz des Test-Ummagnetisierungsimpulses als das Zusatzsignal von der Spule an die Auswerteeinheit geliefert wird, Überprüfen durch die Auswerteeinheit, ob das Zusatzsignal den Test-Ummagnetisierungsimpuls enthält oder nicht, und Korrigieren des Werts des Umdrehungszählers, wenn das Zusatzsignal den Test-Ummagnetisierungsimpuls enthält, oder Beibehalten des aktuellen Umdrehungszählerwerts, wenn das Zusatzsignal den Test-Ummagnetisierungsimpuls nicht enthält.

Bei einer vorteilhaften Ausgestaltung weist der Schritt des Korrigierens des Werts des Umdrehungszählers ein drehsinnabhängiges Inkrementieren oder Dekrementieren des Werts des aktuellen Umdrehungszählers auf.

Ferner ist es bevorzugt, wenn der Impulssensor einen ersten Impulsdraht, mindestens einen zweiten Impulsdraht, einen Wickelkörper, in welchem die Impulsdrähte angeordnet sind, sowie eine, vorzugsweise einzige, Spule aufweist, die wiederum den Wickelkörper umgibt, wobei jeder der Impulsdrähte einen äußeren Mantel und einen innerhalb des Mantels angeordneten Kern aufweist und wobei die Impulsdrähte in einer jeweiligen vorgegebenen Position im Wickelkörper fixiert sind.

Gemäß einer bevorzugten Ausführungsform sind äußere Grenzen der jeweiligen verbotenen Quadrantenzone durch Ummagnetisierungs-Zündschwellen der Kerne definiert.

Gemäß einer weiteren bevorzugten Ausführungsform werden die Ummagnetisierungspulse des zweiten Impulsdrahtes als Zusatzsignal verwendet.

Ferner ist es bevorzugt, wenn die Impulsdrähte in axialer Richtung der Geberwelle zueinander beabstandet sind, und vorzugsweise achsparallel zueinander angeordnet sind.

Vorzugsweise sind die Impulsdrähte in einer einzigen Ebene angeordnet, die im Wesentlichen senkrecht zur Drehachse der Geberwelle orientiert ist, und wobei der erste Impulsdraht einen Winkel mit jedem der zweiten Impulsdrähte einschließt.

Bei einer weiteren vorteilhaften Ausgestaltung ist der Impulssensor koaxial zum Erregermagneten angeordnet, wobei die Impulsdrähte in zumindest einer Ebene angeordnet sind, die jeweils im Wesentlichen senkrecht zur Drehachse der Geberwelle und im Wesentlichen parallel zur Rotationsebene des Erregermagneten orientiert ist.

Ferner ist es bevorzugt, wenn der Erregermagnet ein einziger Dipolmagnet ist, der in einer Ebene angeordnet ist, die im Wesentlichen senkrecht zur Drehachse orientiert ist.

Vorzugsweise ist der Impulssensor exzentrisch zur Drehachse der Geberwelle angeordnet, wobei neben dem koaxial angeordneten Erregermagneten mindestens vier Zusatzmagneten vorgesehen sind, die in Umfangsrichtung mit wechselnd orientierten Magnetfeldern gleichmäßig verteilt an der Geberwelle befestigbar sind, so dass in jedem Quadrant mindestens ein Ummagnetisierungsimpuls erzeugt wird, wobei solche Ummagnetisierungsimpulse, die von den üblichen Ummagnetisierungsimpulsen abweichen, das Zusatzsignal liefern.

Weiter vorzugsweise ist die Anzahl der Zusatzmagnete durch 2ⁿ definiert, wobei n eine ganzzahlige Zahl ist, die größer als 2 ist.

Die Aufgabe wird ferner durch einen energieautarken Multiturn-Drehgeber gemäß Anspruch 25 gelöst.

Ferner ist es bevorzugt, wenn der optische Sensor eine LED-Diode und einen Schmitt-Trigger aufweist.

Bei einer besonderen Ausgestaltung ist der Impulssensor ein Impulsdrahtsensor, der mindestens einen Impulsdraht und eine Spule aufweist, die den mindestens einen Draht umgibt.

Insbesondere weist der Drahtgeber ferner eine absolut kodierte Kodierscheibe auf, die an der Drehgeberwelle drehfest befestigbar ist.

Vorzugsweise weist der Drehgeber ferner ein Register zum Speichern eines Ausgabesignals des optischen Sensors auf.

Die Aufgabe wird auch durch ein Verfahren zur Ermittlung einer eindeutigen Position einer Geberwelle gemäß Anspruch 30 gelöst.

Insbesondere weist das Verfahren ferner auf: Ausschalten des optischen Sensors, nachdem das entsprechende Signal erzeugt und ausgegeben ist.

Das Verfahren kann ferner aufweisen: Einschalten einer Lichtquelle, nachdem die Auswerteeinheit und der optische Sensor aktiviert sind und Ausschalten der Lichtquelle, wenn das entsprechende Signal ermittelt wurde.

Vorzugsweise weist der optische Sensor eine Fotodiode und einen Schmitt-Trigger auf.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: einen Multiturn-Drehgeber;
- Fig. 2: verschiedene Zustände eines Impulsdrahts (Fig. 2A) und eine Tabelle von Impulsvarianten (Fig. 2B)
- Fig. 3: ein Blockdiagramm des Drehgebers der Fig. 1;
- Fig. 4: einen Verlauf eines Magnetfelds, welches durch einen mit einer Geberwelle drehfest verbundenen Erregermagneten erzeugt wird (Fig. 4A) und ein Sinus- und ein Kosinusausgangsignal eines xMR-Elements (Fig. 4B);
- Fig. 5: kritische Punkte in einem Signalverlauf ohne Richtungsänderungen;
- Fig.6: kritische Punkte in einem Signalverlauf mit Richtungsänderung inkl. undefinierten Zonen;
- Fig. 7: Flussdiagramme eines Verfahrens zum Ermitteln einer eindeutigen Position einer Geberwelle;
- Fig. 8: eine Seitenansicht (Fig. 8A) und einen Querschnitt (Fig. 8B) eines Impulsdrahtsensors mit mehreren Drähten;
- Fig. 9: eine Seitenansicht (Fig. 9A) und einen Querschnitt (Fig. 9B) eines weiteren Impulsdrahtsensors mit mehreren Drähten;
- Fig. 10: eine Draufsicht (Fig. 10A) auf einen MT-Drehgebers mit Zusatzmagneten, einen Signalverlauf ohne Richtungsänderung (Fig. 10B) und einen Signalverlauf mit Richtungsänderung (Fig. 10C);
- Fig. 11: eine Draufsicht (Fig. 11A) auf einen weiteren MT-Drehgeber mit Zusatzmagneten, einen Signalverlauf ohne Richtungsänderung (Fig. 11 B) und einen Signalverlauf mit Richtungsänderung (Fig. 11 C);
- Fig. 12: eine Draufsicht auf einen noch weiteren MT-Drehgeber;
- Fig. 13: einen Aufbau eines optischen MT-Drehgebers;
- Fig. 14: ein Blockdiagramm des optischen MT-Drehgebers der Fig. 13;
- Fig. 15: Sinus- und Kosinusausgangssignale des MT-Drehgebers der Fig. 13;
- Fig. 16: eine Kodierscheibe des MT-Drehgebers der Fig. 13;
- Fig. 17: eine Übersicht über Signale verschiedener Funktionsblöcke des MT-Drehgebers der Fig. 13; und
- Fig. 18: eine Abwandlung der Kodierscheibe der Fig. 16.

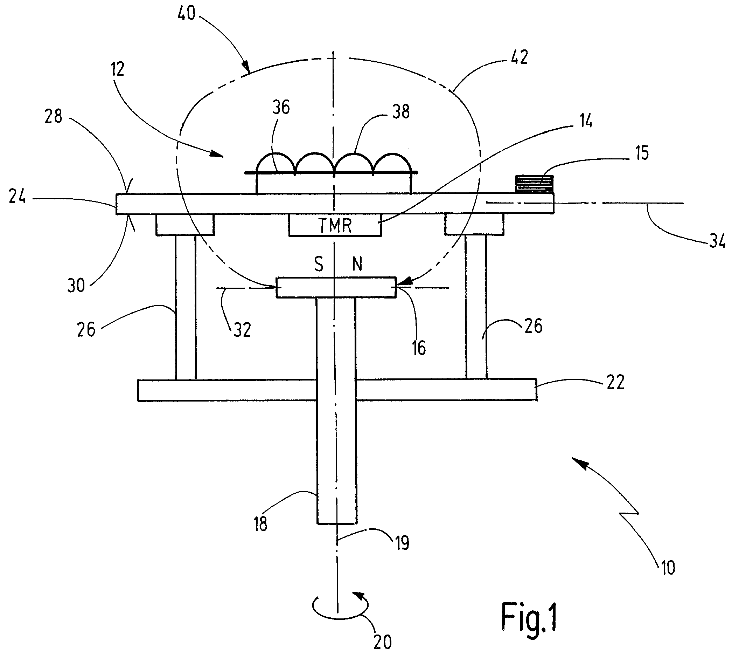

Fig. 1 zeigt eine stark vereinfachte Darstellung eines MT-Drehgebers 10. Der MT-Drehgeber 10 weist einen Impulsdrahtsensor 12 (z.B. einen Wieganddrahtsensor), einen Magnetfeldsensor (insbesondere ein xMR-Element 14) und eine Auswertelogik bzw. -einheit 15 auf. Die Funktionsweise des Impulsdrahtsensors 12 bzw. eines Wiegand-Drahtsensors ist aus den vorgenannten Dokumenten ausreichend bekannt. In diesem Zusammenhang wird insbesondere auf die DE 34 08 478 C1 verwiesen.

Der MT-Drehgeber 10 wirkt mit einem Erregermagneten 16 zusammen, der vorzugsweise als Permanentmagnet, insbesondere als Dipol, ausgebildet ist, der an einer Geberwelle 18 drehfest befestigt ist, um mit der Geberwelle 18 um eine Drehachse 19 zu rotieren. Der Erregermagnet 16 und die Geberwelle 18 können im Uhrzeigersinn oder gegen den Uhrzeigersinn rotieren. In der Fig. 1 rotiert die Geberwelle 18 gegen den Uhrzeigersinn, wie es durch eine Drehrichtung 20 angezeigt ist. Die Geberwelle 18 gehört zu einer externen Vorrichtung oder koppelt an die externe Vorrichtung, die hier nicht gezeigt ist und deren Rotation gemessen werden soll. Die Geberwelle 18 kann durch nicht gezeigte Wellenlager in einem Gehäuse 22 des MT-Drehgebers 10 drehbar gelagert sein. Optional ist auch ein sogenannter "KIT-Geber" möglich, der nicht gelagert ist und zwei Komponenten (Stator und Rotor) aufweist. Das Gehäuse 22 ist in Figur 1 nur teilweise dargestellt und kann z.B. mit einer Leiterplatte 24 über Abstandsbolzen 26 verbunden sein. Der Impulsdrahtsensor 12 kann auf einer Oberseite 28 der Leiterplatte 24 angeordnet sein. Das xMR-Element 14 kann auf einer Unterseite 30 der Leiterplatte 24 angeordnet sein. Es versteht sich, dass der Impulsdrahtsensor 12 und das xMR-Element 14 ihre Positionen tauschen können oder beide auf der gleichen Seite 28 oder 30 der Leiterplatte 14 angeordnet sein können. Der Sensor 12 und das Element 14 können auch einem anderen Bauteil des MT-Drehgebers 10 befestigt sein. In der Fig. 1 ist ferner eine exemplarische zentrische (koaxiale) Anordnung der Geberwelle 18, des Erregermagnets 16, des xMR-Elements 14 und des Impulsdrahtsensors 12 gezeigt. Diese Komponenten 12- 18 sind in einer axialen Richtung der Geberwelle 18 beabstandet zueinander angeordnet. Diese Art der Anordnung ist besonders dann von Vorteil, wenn ein als Dipol ausgebildeter Permanentmagnet als Erregermagnet 16 verwendet wird, der in einer Rotationsebene 32 angeordnet ist und dreht, die senkrecht zur Drehachse 19 orientiert ist. Es versteht sich, dass die Ausrichtung der Rotationsebene 32 leicht mit einigen Grad von einer 90°-Ausrichtung gegenüber der Drehachse 19 abweichen kann, ohne die nachfolgend beschriebene Funktionsweise der Erfindung einzuschränken. Die Rotationsebene 32 ist dann noch immer im Wesentlichen senkrecht zur Drehachse 19 ausgerichtet.

In der Fig. 1 ist ferner eine Montageebene 34 für den Sensor 12 und das xMR-Element 14 gezeigt, die parallel zur Rotationsebene 32 angeordnet ist und die durch die Leiterplatte 24 verläuft. Auch wenn die Ausrichtungen einen (kleinen) Winkel von wenigen Grad miteinander einschließen, werden sie im Nachfolgenden als im Wesentlichen parallel ausgerichtet angesehen. Das xMR-Element 14 und der Impulsdrahtsensor 12 sind parallel zur Montageebene 34 (Leiterplatte 24) angeordnet.

Der Impulsdrahtsensor 12 weist einen Impulsdraht, insbesondere einen Wiegand-Draht, 36 (nachfolgend auch kurz als "Draht" bezeichnet) auf, der von einer Spule 38 umgeben ist und der in der Fig. 1 parallel zur Montageebene 34 angeordnet ist. Die Ausrichtung des Impulsdrahtsensors 12 hängt von der Orientierung eines externen Magnetfelds 40 ab, das im Impulsdraht 36 einen Ummagnetisierungsimpuls zum ausschließlichen Zweck einer Energiegewinnung erzeugt und im xMR-Element 14 zur Bestimmung einer Feldstärke und -richtung benutzt wird. In der Fig. 1 wird der Erregermagnet 16 als einziges Bauteil sowohl zur Energieerzeugung im Sensor 12 als auch zur Bestimmung eines absoluten Drehwinkels (ST-Drehwinkel) mittels des Elements 14 eingesetzt. Die Energie wird durch den Impulsdrahtsensor 12 gewonnen. Der absolute Drehwinkel wird auf Basis eines Signals ermittelt, welches im xMR-Element 14 erzeugt wird. Es versteht sich, dass mehrere räumlich voneinander getrennte Magneten, auch mehrpolige Magneten, eingesetzt werden können, um die Energieerzeugung separat von der Ermittlung des absoluten Drehwinkels zu ermöglichen, wie es nachfolgend noch näher erläutert werden wird. Aus Gründen einer vereinfachten Beschreibung wird nachfolgend vorerst davon ausgegangen, dass nur der vorzugsweise bipolare Erregermagnet 16 für beide Zwecke eingesetzt wird.

Das xMR-Element 14 baut physikalisch auf dem magnetoresistiven Effekt auf und ist üblicherweise durch ein, vorzugsweise einziges, TMR-Element realisiert. Das xMR-Element 14 ist ein Bauelement, das zwei Ferromagnetschichten aufweist, die durch eine dünne Isolatorschicht voneinander getrennt sind. Wenn die isolierende Schicht dünn genug ist (typisch sind einige Nanometer), können Elektronen zwischen den beiden Ferromagnetschichten "tunneln". Es handelt sich hier um ein quantenmechanisches Phänomen. Im Wesentlichen unterscheidet man zwischen dem anisotropen magnetoresistiven Effekt (AMR-Effekt) und dem gigantischen magnetoresistiven Effekt (GMR-Effekt). Das xMR-Element 14 kann auch durch ein, vorzugsweise einziges, GMR- oder AMR-Element realisiert sein.

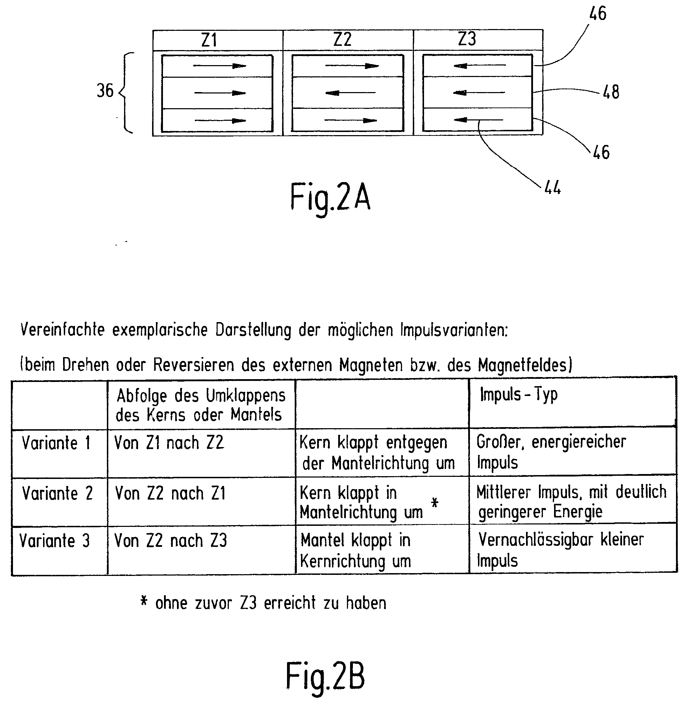

Für die nachfolgende Beschreibung können die nachfolgenden Aspekte für den Impulsdrahts 36 relevant sein:
- Der Impulsdraht 36 weist üblicherweise einen hartmagnetischen Mantel 46 und einen weichmagnetischen Kern 48 (Fig. 2A) auf. Der Mantel 46 und der Kern 48 sind unterschiedlich magnetisierbar. Es gibt grundsätzlich drei Magnetisierungskonstellationen, eine mit gleicher Ausrichtung und zwei mit entgegen gesetzten Ausrichtungen. Auf Grund der Formanisotropie haben die Werkstoffe des Mantels 46 und des Kerns 48 jeweils nur einen Weissschen Bezirk und es existieren somit fast rechteckige Hysteresekurven.
- Der Impulsdraht 36 ist ein bistabiles magnetisches Element.
- Ein äußeres Magnetfeld bestimmter Stärke (Koerzitivfeldstärke) mit einer dem Impulsdraht 36 entgegengesetzten Magnetisierungsrichtung lässt die Magnetisierungsrichtung des Impulsdrahts 36 schlagartig umklappen (Wiegand-Effekt).
- Diese magnetische Flussänderung induziert in der Spule 38 einen kurzen, ca. 20 µs langen elektrischen (Ummagnetisierungs-)Impuls.
- Der Energiegehalt eines solchen Impulses liegt typischerweise im Bereich von 40 bis 150 nWs, abhängig von einer Impulsdrahtlänge, Kennzahlen der Spule 38, Lastwiderständen und dergleichen.
- Eine Länge des Impulses und ein Energiegehalt des Impulses sind weitestgehend von der Änderungsgeschwindigkeit und der Richtung des externen Magnetfelds 40 unabhängig.
- Ein "symmetrischer Betrieb" erzeugt aus der Ummagnetisierung positive und negative Spannungsimpulse in der Spule 38 bei einer Änderung der Polarität und Feldstärke des externen Magnetfelds 40. Der symmetrische Betrieb liegt vor, wenn die externe Magnetfeldstärke 40 ausreicht, zuerst den Kern 48 und danach den Mantel 46 umzumagnetisieren und den Impulsdraht 36 in die magnetische Sättigung zu bringen.
- Ein "asymmetrischer Betrieb" erzeugt nur Spannungsimpulse gleichbleibender Polarität bei einer Änderung der Polarität und der Feldstärke des externen Magnetfelds 40. Der asymmetrische Betrieb liegt vor, wenn die Magnetfeldstärke lediglich ausreicht, um den Kern 48 nicht aber den Mantel 46 umzumagnetisieren. Vorliegend wird im Wesentlichen im symmetrischen Betrieb gearbeitet.
- Ein Wiegand-Sensor besteht aus einem Wiegand-Draht und einer Spule.
- Als "Zündfeldstärke", "Zündschwelle" oder "Triggerschwelle" wird nachfolgend eine jeweilige externe Magnetfeldstärke bezeichnet, die erforderlich ist, um den Kern 48 bzw. den Mantel 46 des Drahtes 36 umzumagnetisieren. Nachfolgend wird dies auch als ein "Umklappen" der Magnetorientierung des Kerns 48 bzw. des Mantels 46 bezeichnet.

Bezug nehmend auf die Fig. 2A wird nachfolgend das oben erwähnte "Ummagnetisieren" bzw. "Umklappen der Magnetorientierung(en)" anhand von drei Zuständen Z1-Z3 des Drahts 36 erläutert, der in Form eines Längsschnitts durch den Draht 36 dargestellt ist. Der Mantel 46 umgibt den inneren Kern 48 vollständig. Eine magnetische Feldrichtung ist in Form von Pfeilen 44 im Mantel 46 bzw. im Kern 48 angedeutet. Im Zustand Z1 ist das äußere Magnetfeld 40 mit seinen Magnetfeldlinien 42 (vgl. Fig. 1) in der gleichen Richtung wie die Feldrichtung 44 im Draht 36 orientiert. Im Zustand Z2 hat sich die Richtung des äußeren Felds 40 umgedreht und ist so stark geworden, dass die Feldrichtung 44 im Kern 48 umklappt, wohingegen die Stärke des externen Magnetfelds 40 aber noch nicht ausreicht, um auch die Feldrichtung 44 des Mantels 46 umzukehren, d.h. den Mantel 46 umzumagnetisieren. Im Zustand Z3 ist das äußere Magnetfeld 40 weiterhin wie im Zustand Z2 orientiert, aber mittlerweile so stark geworden, dass auch der Mantel 46 ummagnetisiert ist.

Fig. 2B zeigt eine Tabelle, in der mögliche (Ummagnetisierungs-)Impulsvarianten vereinfacht exemplarisch dargestellt sind.

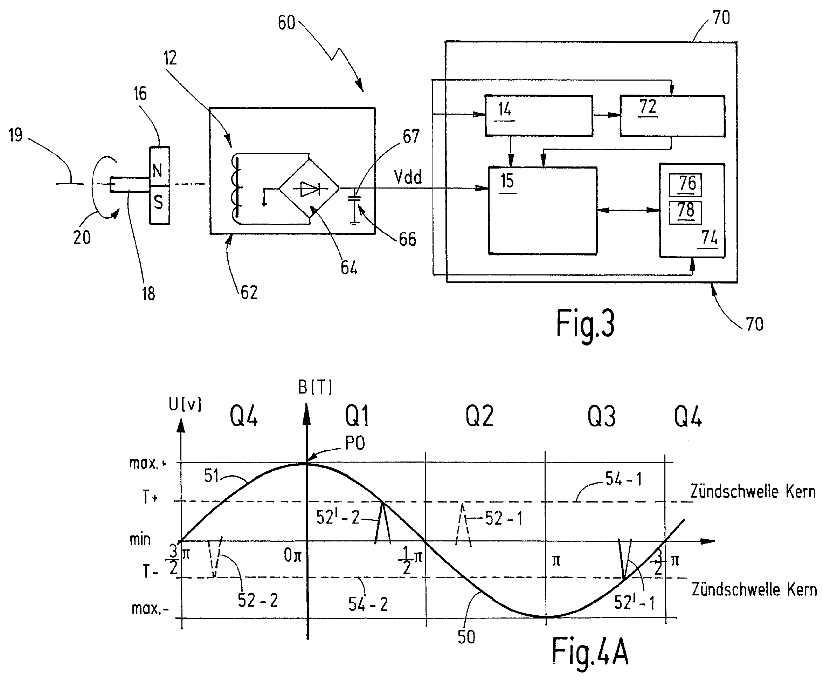

Beginnend im Zustand Z1 lässt das äußere Magnetfeld 40 beim Erreichen einer bestimmten Stärke (Koerzitivfeldstärke des Kerns) mit einer dem Draht 36 entgegengesetzten Magnetisierungsrichtung (d.h. das äußere Feld 40 ist von rechts nach links gerichtet) die Magnetisierungsrichtung 44 des Kerns 48 schlagartig umklappen (Wiegand-Effekt). In der Spule 38 (vgl. Fig. 1) wird dann ein großer, energiereicher (Ummagnetisierungs-)Impuls 52 bzw. 52' erzeugt, wie es nachfolgend unter Bezugnahme auf Fig. 4A nochmals erläutert werden wird, weil der Kern 48 gegen die Feldrichtung des Mantels 46 umklappt (Variante 1). Würde man die Stärke des äußeren Magnetfelds 40 dann kontinuierlich erhöhen, so dass die Ausrichtung des äußeren Magnetfelds 40 erhalten bleibt und die Stärke steig zunimmt, würde auch der Mantel 46 in der Feldrichtung 44 des Kerns 48 umklappen, wie es im Zustand Z3 gezeigt ist. Das Umklappen des Mantels 46 parallel zum Kern 48 resultiert in einem kleinen Ummagnetisierungsimpuls, der kaum messbar ist (Variante 3). Kehrt man die Richtung des äußeren Magnetfelds ausgehend vom Zustand Z2 jedoch um, bevor der Zustand Z3 erreicht ist, dann klappt der Kern 48 wieder in Richtung des Mantels 46 in den Zustand Z1 zurück (Variante 2), was in einem mittleren Ummagnetisierungsimpuls (in Fig. 4A nicht gezeigt) resultiert, der eine deutlich geringere Energie als der Impuls bei der Variante 1 aufweist.

Im "symmetrischen Betrieb" werden durch die Spule 38 positive und negative Spannungsimpulse bei einer Änderung der Polarität und der Feldstärke des externen Magnetfelds 40 erzeugt. Beim Ummagnetisieren des Kerns 48 entgegen der Magnetrichtung entsteht ein relativ großer Impuls 52 bzw. 52' mit hohem Energiegehalt. Beim Umklappen des Mantels 46 - bei fortgesetzter Drehung des Erregermagnets 16 in der gleichen Drehrichtung - entsteht ein nur relativ kleiner Impuls (Variante 3), der wegen seines sehr geringen Energiegehalts nicht weiter verwendet werden kann. Bei der Variante 2 klappt der Kern 48 wieder in Richtung des Mantels 46 zurück, weil sich die Drehrichtung der Geberwelle und somit die Polarität des externen Magnetfelds 40 anfängt zu ändern, bevor auch der Mantel 46 in Richtung des Kerns 48 umklappen kann (Variante 2). Die Variante 2 stellt ein eher seltenes Ereignis dar, das sich in der Regel nur dann ergibt, wenn die Umkehrung des Drehsinn 20 der Geberwelle 18 unmittelbar während oder nach einem Ummagnetisierungsimpuls 52 bzw. 52' der Variante 1 eintritt, und zwar bevor der Zustand Z3 bei theoretisch fortgesetztem Drehsinn einsetzt.

Fig. 3 zeigt ein Blockdiagramm 60 des MT-Drehgebers 10 der Fig. 1. In einem Block 62 wird die Energie erzeugt und gegebenenfalls gespeichert, die zur Signalauswertung und -verarbeitung, insbesondere zur Zählung von 360°-Umdrehungen, benötigt wird. Der Block 62 kann einen Gleichrichter 64 aufweisen, um die während einer 360°-Umdrehung erhaltenen Ummagnetisierungsimpulse 52 bzw. 52', die entgegen gesetzte Polaritäten aufweisen, alle gleich auszurichten. Die durch einen Ummagnetisierungsimpuls 52 bzw. 52' erzeugte Energie, die üblicherweise 40 bis 150 nWs beträgt, kann in einem Energiespeicher 66 (z.B. in einem Kondensator 67) gepuffert werden. Die gewonnene Energie ist aber äußerst gering, wenn damit eine Umdrehungszählung durchgeführt werden soll, während der eine externe Energieversorgung abgeschaltet ist und bleibt. Dies bedeutet, dass für den kompletten Umdrehungszählprozess lediglich die Energie des Ummagnetisierungsimpulses 52 zur Verfügung steht.

Ein weiterer Block 70 dient zur Signalerzeugung, Signalauswertung und zur Speicherung von relevanten Daten, wie zum Beispiel zur Speicherung der Anzahl der vollständigen 360°-Umdrehungen und einer Quadrantenhistorie, auf die nachfolgend noch näher eingegangen werden wird. Der Block 70 weist zum Beispiel das xMR-Element 14, die Auswerteeinheit 15, einen (optionalen) Komparator 72 (z.B. Schmitt-Trigger) und ein Speicherelement 74 auf. Das Speicherelement 74 kann einen Umdrehungszähler 76 und einen (Historien-)Speicher 78 aufweisen. Es versteht sich, dass das Speicherelement 74, der Umdrehungszähler 76 und/oder der Historienspeicher 78 auch in die Auswerteeinheit 15 integriert sein können. Die Auswerteeinheit 15 kann auch den Gleichrichter 64 integriert haben. Die Auswerteeinheit 15 kann zum Beispiel in Form eines Mikrocontrollers oder eines ASIC-Chips realisiert sein. Der Impulsdrehsensor 12 ist vorzugsweise als Wiegand-Sensor ausgebildet. Das xMR-Element 14 ist vorzugsweise hochohmig ausgelegt, um den Energieverbrauch so weit wie möglich zu reduzieren.

Um eine einfache, kostengünstige und Bauteil-effiziente Lösung realisieren zu können, kann das nachfolgend beschriebene Konzept gewählt werden.

Der Impulsdrahtsensor 12 wird ausschließlich als Energiegenerator verwendet und alle erforderlichen Informationen für eine Umdrehungszählung und Feinpositionsermittlung werden von nur einem einzigen Bauteil abgeleitet, welches hier durch das xMR-Element 14 realisiert ist.

Eine Lösung, die, wie im Stand der Technik vorgeschlagen, einen Hallsensor anstatt des xMR-Elements 14 einsetzt, ist bei der in der Fig. 3 gezeigten Anordnung bzw. Kombination grundsätzlich nicht ausgeschlossen, führt aber aus den nachfolgenden Gründen nicht zum Ziel, d.h. nicht zu einer energieautarken Lösung für die Umdrehungszählung. Ein Hallsensor ist im Vergleich zu einem xMR-Element ein komplexer Schaltkreis, der typischerweise eine relativ lange Einschwingphase nach dem Einschalten der externen Versorgungsspannung aufweist. Die Einschwingphase ist unter anderem dadurch bedingt, dass der Hallsensor eine geregelte Betriebsspannung benötigt. Während dieser Einschwingphase kann sich aber die Energie, die durch den Impulsdrahtsensor 12 gewonnen würde, zum Beispiel durch Kriechströme oder Selbstentladung des Kondensators 67 deutlich verringern und damit weitere Anforderungen an die restliche Schaltung hinsichtlich einer maximal zulässigen Energieaufnahme deutlich verschärfen. Generell benötigt ein fein auflösender Singleturn-Sensor (ST-Sensor), in diesem Fall also der Hallsensor, ein qualitativ hochwertiges Signal mit einem hohen Signal-Rausch-Abstand, damit eine hohe Auflösung von typischerweise ≥ 8 Bit/360°-Umdrehung generierbar ist. Da aber nur die Energie eines Ummagnetisierungsimpulses (40 bis 150 nWs) zur Verfügung steht, setzt der Multiturn-Drehgeber (MT-Drehgeber) 10 einen ST-Sensor (xMR-Element 14) ein, der mit äußerst wenig Energie auskommt und dennoch ein gutes Signal liefert. Da das bei einem Hallsensor zur Verfügung stehende Auswertungssignal, d.h. die Hall-Spannung, im Wesentlichen durch das Produkt aus der Stromstärke und der magnetischen Induktion bestimmt ist, könnte der Hallsensor bei vorgegebener magnetischer Induktion prinzipbedingt nicht beide Anforderungen (qualitativ hochwertiges Signal und gleichzeitig ein geringer Energieverbrauch) erfüllen. Deshalb haben die Erfinder der vorliegenden Erfindung erkannt, dass ein (hochohmiger) ST-Sensor (wie z.B. das xMR-Element 14) eingesetzt werden soolte. Von allen bekannten physikalischen Effekten, die mittels Magnetismus in einem Festkörper eine elektrische Eigenschaft ändern, ist die MR-Technologie besonders hervorzuheben. Der MR-Effekt liefert schon bei schwachen Magnetfeldern ein Signal mit einem sehr guten Signal-Rausch-Verhältnis. Obwohl die diversen MR-Technologien (wie z.B. AMR, GMR, TMR) auf verschiedenen Effekten aufbauen, ist ihnen Folgendes gemein:
- Sie verändern ihren Widerstand in Abhängigkeit des externen Magnetfelds.
- Die xMR-Sensoren werden typischerweise durch einfache passive Widerstands-(Halb-)Brücken realisiert, die (nahezu sofort) nach dem Einschalten einer Versorgungsspannung, d.h. trägheitsfrei, ein auswertbares Signal liefern.
- Sie lassen sich durch eine entsprechende Strukturierung hochohmig ausgestalten.

Die Verwendung eines hochohmigen xMR-Elements 14 als ST-Sensor ist also von Vorteil. Beim Betrieb des MT-Drehgebers 10 ohne externe Energieversorgung wird die Energie, die für eine Ermittlung der Anzahl der 360°-Umdrehungen benötigt wird, aus der mechanischen Bewegung der Geberwelle 18 bzw. der Rotation des Erregermagneten 16 gewonnen. Der (vorzugsweise symmetrisch betriebene) Impulsdrahtsensor 12 erzeugt beim Durchlauf des vorzugsweise bipolaren Erregermagneten 16 über 360° jeweils einen positiven und einen negativen Ummagnetisierungsimpuls 52 bzw. 52', wie es exemplarisch in Fig. 4A gezeigt ist.

In der Fig. 4A ist ein Verlauf 50 des externen Magnetfelds 40 gemäß den Fig. 1 und 3 gezeigt. Der Verlauf 50 des Magnetfelds 40 spiegelt sich in einem Signalverlauf 51 des xMR-Elements 14 wider. In der Fig. 4A liegen die beiden Verläufe 50 und 51 übereinander. Nachfolgend wird davon ausgegangen, dass die 360°-Umdrehung ihren physischen Nulldurchgang beim Punkt P0 hat. Die Stärke des externen magnetischen Felds 40 ist im Punkt P0 ist maximal positiv bei positiver Orientierung des Felds 40, wohingegen die Stärke nach einer Drehung der Geberwelle 18 um 90° nahezu Null ist und nach einer weiteren Drehung um 90° in die gleiche Richtung maximal negativ ist.

Nachfolgend wird davon ausgegangen, dass sich die Geberwelle 18 so dreht, dass der Signalverlauf 51 von links nach rechts in der Fig. 4A verläuft. Ein "Nulldurchgang" des externen Magnetfelds 40 tritt also auf, wenn sich die Geberwelle 18 um 90° gedreht hat. Ein "Nulldurchgang der Umdrehungszählung" stimmt (auswertungslogisch) üblicherweise mit einem der Ummagnetisierungsimpulse 52 überein, auf deren relative (Winkel-)Lage nachfolgend noch näher eingegangen wird. Der Phasenversatz der verschiedenen "Nulldurchgänge" macht es für die Umdrehungszählung und die Bestimmung einer fein aufgelösten Position (das heißt eines absoluten Drehwinkels innerhalb einer 360°-Umdrehung) erforderlich, eine Synchronisation durchzuführen, auf die ebenfalls später noch näher eingegangen werden wird.

Durchläuft man also die in der Fig. 4A gezeigte Sinuskurve (Verlauf 50 und 51) von links nach rechts, so dreht sich die Polarität des äußeren Magnetfelds 40 bei der 90°-Stellung der Geberwelle (18) und die Feldstärke erreicht dann eine Triggerschwelle T-, bei der ein erster großer Ummagnetisierungsimpuls 52-1 (vgl. Variante 1 in Fig. 2A und 2B) erzeugt wird. Nach einer weiteren Drehung um 180° wird ein zweiter entgegengesetzt gepolter Ummagnetisierungsimpuls 52-2 bei eine Triggerschwelle T+ erzeugt. Die Triggerschwelle T+ und die Triggerschwelle T- entsprechen Zündschwellen 54-1 und 54-2 des Kerns 48, die in der Fig. 4A durch horizontale Strichlinien angedeutet sind. Die Anzahl von zwei Ummagnetisierungsimpulsen 52 pro 360°-Umdrehung ist der Tatsache geschuldet, dass der Erregermagnet 16 bipolar ist. Würde ein Quattropol eingesetzt werden, würde man 4 Impulse 52 pro 360°-Umdrehung erhalten. Die Ummagnetisierungsimpulse 52-1 und 52-2 liegen bei einem Signalverlauf 50 bzw. 51 von links nach rechts in sogenannten Quadranten Q2 und Q4. In der Fig. 4A ist eine vollständige 360°-Umdrehung auswertungslogisch in vier gleichgroße Quadranten Q1-Q4 unterteilt, so dass jeder Quadrant Q1-Q4 einen Winkelbereich von 90° abdeckt. Es versteht sich, dass die nachfolgenden Erläuterungen auf Basis eines 90°-großen Quadranten lediglich exemplarischer Natur sind. Genauso wäre es denkbar, die "Quadranten" in 45°- oder 120°-große Segmente zu wandeln, was aber die Auswertung aufwändiger machen würde.

Bei der Ausgestaltung des MT-Drehgebers 10 sollte darauf geachtet werden, dass die Ummagnetisierungsimpulse 52 im Wesentlichen mittig (45 +/- 10 Grad) in den Quadranten Q1-Q4 angeordnet sind. Lässt man die Drehgeberwelle 18 in umgekehrter Richtung rotieren, so dass die Sinuskurve der Fig. 4A von rechts nach links durchlaufen wird, ergeben sich die Ummagnetisierungsimpulse 52'-1 und 52'-2, die in der Fig. 4A mit einer durchgezogenen Linie gezeigt sind. Die Ummagnetisierungsimpulse 52' liegen in den Quadranten Q1 und Q3, wohingegen die Ummagnetisierungsimpulse 52 in den Quadranten Q2 und Q4 liegen. In der Fig. 4A ist außerdem klar zu erkennen, dass die Ummagnetisierungsimpulse 52 um einige Grad relativ zur jeweiligen Quadrantenmitte von 45° versetzt liegen können. Die relative Lage der Ummagnetisierungsimpulse 52 bzw. 52' ist im Wesentlichen durch eine räumliche (Winkel-)Ausrichtung des Impulsdrahtsensors 12 gegenüber dem xMR-Element 14 bedingt. Weitere Faktoren, die einen Einfluss auf die relative Lage der Ummagnetisierungsimpulse 52 und 52' haben, sind zum Beispiel in der Feldstärke des Erregermagneten 16, einer Sensitivität des Impulsdrahtsensors 12, der Größe des Abstands zwischen dem Erregermagneten 16 und dem Impulsdrahtsensor 12, einer Wahl der hartmagnetischen und weichmagnetischen Materialien des Mantels 46 und des Kerns 48 und dergleichen zu sehen.

Da die Ummagnetisierungsimpulse 52 und 52' im Wesentlichen mittig in den zugehörigen Quadranten Q1-Q4 liegen, erhält der MT-Drehgeber 10 eine maximale Toleranzbandbreite von ± 45° zwischen einer Winkellage des Impulsdrahtsensors 12 und des xMR-Elements 14 (siehe auch Fig. 1) und erleichtert damit eine Montage herstellerseitigen Zusammenbau) der entsprechenden Bauteile und ist auch über weite Temperaturbereiche stabil.

Wenn die nachfolgend beschriebene Auswertung quadrantenbezogen erfolgt, ist es von Vorteil, wenn die Ummagnetisierungsimpulse 52 und 52' jeweils eindeutig innerhalb eines der Quadranten Q1-Q4 liegen. Bedingt durch die Schalthysterese des Impulsdrahtsensors 12 liegen die Impulse 52 und 52' bei einer Rechts- bzw. Linksdrehung der Geberwelle 18 bzw. des Erregermagneten 16 jeweils in einem benachbarten Quadranten. Zusammen mit einer (gespeicherten) Historie von zuvor durchlaufenen Quadranten ist hierdurch eine eindeutige Unterscheidung zwischen einer Rechtsdrehung (Q2-Q4-Q2-... usw.) und einer Linksdrehung (Q1-Q3-Q1- ... usw.) möglich. Im Beispiel der Fig. 4A bedeutet dies, dass die Rechtsdrehung zum Beispiel durch die Ummagnetisierungsimpulse 52 in den Quadranten Q2 und Q4 erkennbar ist, wohingegen die Linksdrehung dann durch die Ummagnetisierungsimpulse 52' in den Quadranten Q1 und Q3 erkennbar ist. Aus der Polarität der Ummagnetisierungsimpulse 52 und 52' lassen sich bei dieser Ausführungsform keine Rückschlüsse ziehen, da sie zwecks Energiepufferung über den Gleichrichter 64 geleitet und gegebenenfalls im Kondensator 67 zwischengespeichert werden. Der Kondensator 67 versorgt dann die weiteren Schaltungsblöcke, wie zum Beispiel die Auswerteelektronik 15, das xMR-Element 14, den Komparator 72 und das Speicherelement 74, mit einer sich daraus ergebenden Betriebsspannung Vdd.

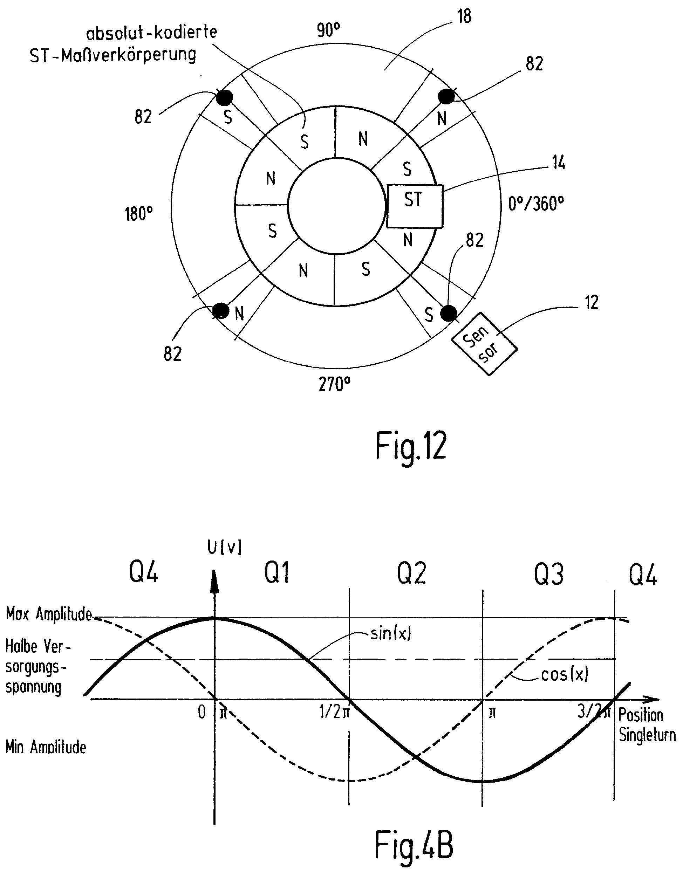

In der Fig. 4B ist nochmals die Sinuskurve (vgl. durchgezogene Linie) der Fig. 4A gezeigt, die einerseits dem Magnetfeldverlauf 50 und andererseits dem Verlauf 51 eines Sinus-Ausgangssignals des xMR-Elements 14 entspricht. Die in der Fig. 4B gestrichelt dargestellte Linie entspricht einem Verlauf eines Kosinus-Ausgangssignals des xMR-Elements 14. Die Quadranten Q1-Q4 entsprechen vier 90°-Winkelbereichen des sinusförmig verlaufenden Magnetfelds 40 bei einer Drehung der Geberwelle 18 bzw. des Erregermagnets 16. Bei einer entsprechenden Ausrichtung des 360°-messenden xMR-Elements 14 entspricht der Sinusverlauf gleichzeitig dem Verlauf der Ausgangsspannung einer der Brückenschaltungen (hier Sinussignal) des xMR-Elements 14. Die zweite Brückenschaltung liefert dann den dazugehörigen Kosinus des Signals. Somit können die vier Quadranten Q1-Q4 auch als die zwei MSB (Most Significant Bits) einer ST-Feinposition (absoluter Drehwinkel) interpretiert werden.

Unmittelbar nachdem einer der Ummagnetisierungsimpulse 52 bzw. 52' stattgefunden hat, ist die Auswerteeinheit 15 betriebsbereit. Mit der aus dem Impuls gewonnenen Energie kann die Position (Stärke des externen Magnetfelds 40) des xMR-Elements 14 durch die Auswerteeinheit 15 abgefragt werden, woraus anschließend die Richtung des Magnetfelds 40 ableitbar ist. Gleiches gilt für den Quadranten Q1-Q4, in dem zuletzt ein Impuls 52 bzw. 52' ausgelöst wurde. Eine Historie (zeitliche Abfolge) der durchlaufenen Quadranten kann im Historienspeicher 78 (vgl. Fig. 3) hinterlegt sein. Ein Wert (Anzahl des bisherigen 360°-Umdrehungen) des Umdrehungszählers 76 wird durch die Auswerteeinheit 15 abgefragt. Dies bedeutet, dass die Auswerteeinheit 15 einen alten Status (Historie der zuletzt gespeicherten Quadranten sowie den Wert des Umdrehungszählers 76) aus dem Speicherelement 74 erfragt bzw. ausliest. Aus den Informationen (zuletzt gespeicherter Quadrant aus Historie und aktueller Quadrant vom xMR-Element 14) zusammen lassen sich eindeutig eine der nachfolgenden Aktionen durchführen:
- Aktualisierung ausschließlich der Quadrantenhistorie;
- Inkrementierung des Umdrehungszählers (vorliegend um eine halbe Umdrehung) und Aktualisierung der Quadrantenhistorie; oder
- Dekrementierung des Umdrehungszählers (vorliegend um eine halbe Umdrehung) und Aktualisierung der Quadrantenhistorie.

Danach wird der Status (Quadrantenhistorie und Umdrehungszählerwert bzw. -stand) gemäß der neuen Daten aktualisiert, und die aktualisierten Daten werden wieder in dem Speicherelement 74 gespeichert.

Der Komparator 72 im Funktionsblock 70 der Fig. 3 ist nur optional für den Fall vorgesehen, dass ein Pegel des xMR-Elements 14 nicht groß genug ist, um ihn direkt mit der Auswerteeinheit 15 weiterzuverarbeiten.

Wenn zusätzlich zur Energie eines Ummagnetisierungsimpulses 52 bzw. 52' externe Energie zur Verfügung steht, kann der MT-Drehgeber 10 nicht nur die eben beschriebene Umdrehungszählfunktion realisieren, sondern auch eine eindeutige Position bestimmen, indem eine fein aufgelöste Position (absoluter Drehwinkel) des ST-Sensors (xMR-Elements 14) bestimmt wird. Hierzu können der Auswerteeinheit 15 die Sinus- und Kosinussignale (vgl. Fig. 4B) des xMR-Elements 14 direkt zugeführt werden und dort zu einem absoluten Drehwinkel (Wert zwischen 0° und 360°) verarbeitet werden. Dies kann zum Beispiel gemäß der gewöhnlichen Verfahren geschehen, wie zum Beispiel über eine Arctan-Berechnung oder einen Cordic-Algorithmus.

Bei der Bildung und späteren Ausgabe der eindeutigen Position (Summe aus absolutem Drehwinkel und Anzahl der vollständigen Umdrehungen) ist zu berücksichtigen, dass die Nulldurchgänge nicht identisch sind. Ohne die Synchronisation der Informationen wäre die verknüpfte Gesamtpositionsausgabe nicht stetig. Die Synchronisation der Informationen lässt sich aber anhand der bei einem Einschalten der externen Betriebsspannung ermittelten ST-Feinposition und dem daraus abgeleiteten aktuellen Quadranten und dem zuletzt abgespeicherten Quadranten (Historie des zuletzt abgespeicherten Quadranten und des Umdrehungszählerwerts) realisieren. Einer daraus gebildeten jeweiligen Information lässt sich ein spezifischer Korrekturwert zur Ermittlung der genauen und stetigen Gesamtposition aus den ST- und MT-Rohdaten zuordnen.

Beim Betrieb des MT-Drehgebers 10 mit externer Spannungsversorgung kann die Anzahl der vollständigen 360°-Umdrehungen auch ohne den Umdrehungszähler 76 anhand einer Ermittlung von durchlaufenden Nulldurchgängen des ST-Sensors (xMR-Element 14) ermittelt werden. Dadurch entfällt auch die Synchronisation, da der Nulldurchgang für den ST- und den Umdrehungszähler in diesem Fall gleich ist. Bei einem hochdynamischen Betrieb des MT-Drehgebers 10 erreicht man dadurch eine bessere Echtzeitfähigkeit, da der Rechenaufwand für die Synchronisation komplett entfällt und nur einmalig nach dem Einschalten der externen Versorgungsspannung anfällt.

Des Weiteren ist es auch möglich, den Umdrehungszähler einmal über den Impulsdrahtsensor 12 und zum anderen gleichzeitig über die Nulldurchgangs-Zählung des ST-Sensors abzubilden. Dadurch erhält man ein redundantes System mit hoher Zuverlässigkeit bzw. mit einer Selbstüberwachungsoption.

Die ST-Daten können bezüglich Auflösung und Genauigkeit optional noch dadurch verbessert werden, indem zusätzlich zum 360°-messenden TMR-Element z.B. ein über 180°-messender AMR-Sensor (nicht gezeigt) zum Einsatz kommt. Dieser hat prinzipbedingt eine um einen Faktor 2 (also ein Bit) höhere Auflösung und zeigt hinsichtlich des Signal-Rausch-Abstands der rauschenden Hysterese besonders gute Werte. Die Montage kann zum Beispiel auf der dem xMR-Element 14 gegenüberliegenden Leiterplattenseite 28 (vgl. Fig. 1) unterhalb des Impulsdrahtsensors 12 erfolgen.

Einige Vorteile des bisher aufgezeigten MT-Drehgebers 10 sind:
- Es sind nur ein einziger Impulsdrahtsensor 12 und ein einziger Erregermagnet 16 zwingend erforderlich.
- Ein zusätzlicher, spezifischer Hall-Schalter zur Bestimmung einer Polarität des externen Magnetfelds 40 und/oder der Polarität der Ummagnetisierungsimpulse ist nicht erforderlich, da die Magnetfeldpolarität beim vorliegenden Lösungsansatz keine Rolle spielt.
- Der ST-Sensor (xMR-Element 14) liefert als eine einzige Einheit alle Informationen, die für eine Umdrehungszählung erforderlich sind, und zwar direkt beim Erfassen der ST-Position, wobei ein zusätzlicher Schaltkreisaufwand eliminiert wird und die Gesamtkosten gesenkt werden. Wie zuvor erwähnt, ist es zum Beispiel nicht erforderlich, die Polarität der Ummagnetisierungsimpulse 52 bzw. 52' sowie die Magnetfeldpolarität zu erfassen und abzuspeichern.

- Der MT-Drehgeber 10 erlaubt durch seine Quadranten-bezogene Auswertung hohe Montagetoleranzen und ist über weite Temperaturbereiche stabil.
- Der MT-Drehgeber 10 stellt eine Lösung dar, die nicht nur einen Umdrehungszähler abbildet, sondern ist eine Low-Cost-Lösung für ein komplettes Gebersystem bestehend aus einem ST, MT und einer einfachen kostengünstigen Synchronisationseinheit.
- Der MT-Drehgeber 10 ist energieautark und bedarf keiner Stützbatterie für eine Datensicherung, während die externe Spannungsversorgung abgeschaltet ist.
- Der MT-Drehgeber 10 hat keine verschleißbehafteten Bauteile, wie zum Beispiel Getriebe, und auch keine hochempfindlichen Komponenten, wie zum Beispiel Glasscheiben.
- Teure Flussleitstücke werden für den Impulsdrahtsensor 12 nicht benötigt.
- Zur Ermittlung der Quadranten Q1-Q4 können im einfachsten Fall die zwei MSB des ST-Datenworts herangezogen werden. Diese können auch vereinfacht durch eine Digitalisierung der Sinus- und Kosinussignale des xMR-Elements 14 gebildet werden. Alternativ kann über einen Low-Power-AD-Wandler die ST-Position genauer ermittelt werden. Hierdurch lassen sich dann die Quadranten Q1-Q4 per Software in Bezug auf die Lage zu den Ummagnetisierungsimpulsen 52 bzw. 52' während der Phase einer Inbetriebnahme lernen. Dadurch erhält man einen maximalen Toleranzbereich von ± 45°, und zwar unabhängig von einer realen Montagetoleranz, oder man kann bei einem sehr kompakten Drehgeber eine vorgegebene, eventuell ungünstige Relativlage des xMR-Elements gegenüber dem Impulsdrahtsensor 12 per Software korrigieren, um so auch eine extreme Miniaturisierung zu ermöglichen.
- Optional ist mit einem zusätzlichen xMR-Element ein sehr hoch auflösender und genauer MT-Drehgeber realisierbar.

Bei Verwendung eines 180°-messenden AMR-Sensors anstatt eines 360°-messenden TMR-Sensors als xMR-Element 14 kann optional anstatt eines Dipols auch ein zusätzlicher Vierpol- oder Mehrpol-Magnet als Erregermagnet 16 für die Ansteuerung des Impulsdrahtsensors 12 vorgesehen werden, der dann üblicherweise radial versetzt angeordnet ist. Auf diese Weise kann das gleiche Systemprinzip angewendet werden, das dann aber nicht halbe Umdrehungen, sondern zum Beispiel entsprechend Viertelumdrehungen zählt.

Das hier vorgeschlagene Lösungskonzept ist natürlich entsprechend auf lineare Messsysteme übertragbar.

Die Auswertelogik basiert auf einer Low-Power-Technologie. Die Auswerteeinheit 15 kann diskret, als FPGA, als Mikrocontroller oder als ASIC realisiert sein.

Das Speicherelement 74 ist vorzugsweise ein Low-Power-Datenspeicher, wie zum Beispiel ein FRAM. Andere Technologien, wie zum Beispiel MRAM, usw., sind ebenso einsetzbar.

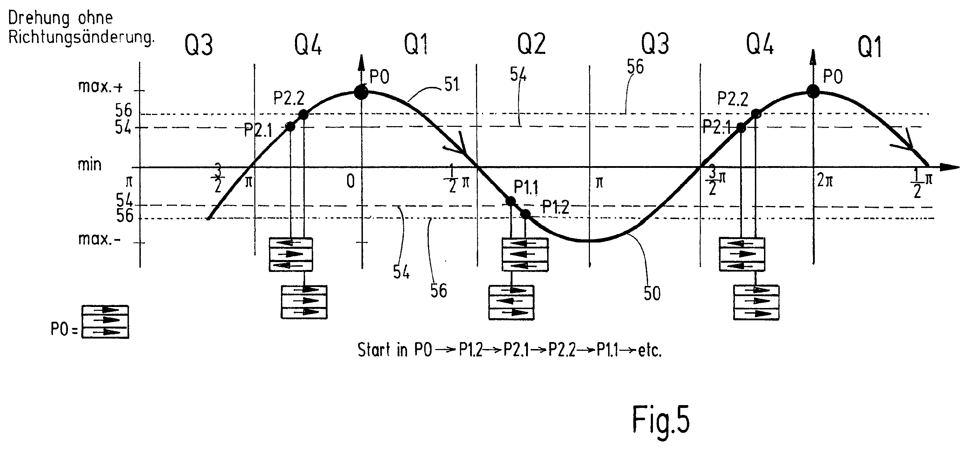

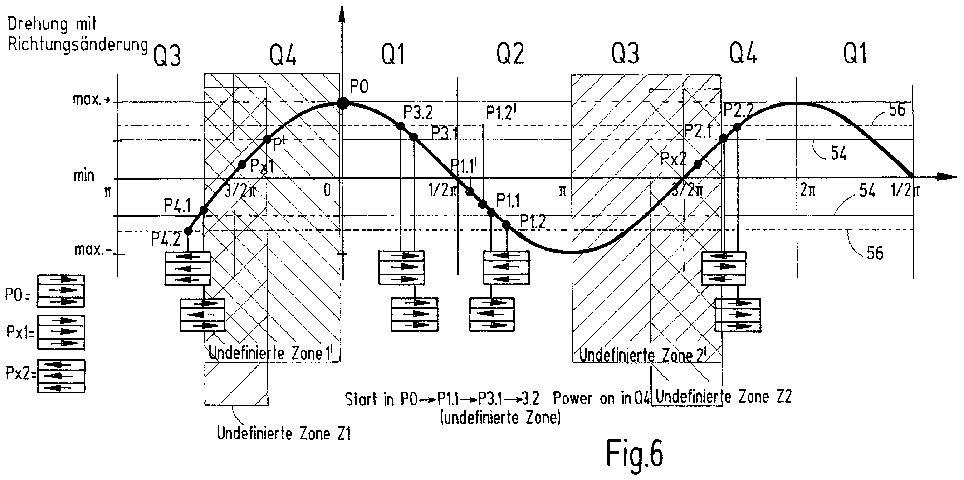

Bezugnehmend auf die Fig. 5 und 6 wird nachfolgend ein Weg aufgezeigt werden, wie eine (Gesamt-)Position der Geberwelle 18 eindeutig, sicher und zuverlässig bestimmbar ist. Fig. 5 zeigt exemplarisch einen Normalbetrieb, ohne dass der Drehsinn 20 (vgl. Fig. 1) geändert wird. Dies bedeutet, dass kein Reversierbetrieb durchgeführt wird, bei dem es zu einer Richtungsänderung des Drehsinns 20 der Geberwelle 18 kommt. Dieser Normalbetrieb ist unkritisch und liefert immer eindeutige Informationen, die einen (Absolut-)Wert des Umdrehungszählers 76 (vgl. Fig. 3) gewährleisten. Anhand der Fig. 6 wird dann, auch exemplarisch, ein Sonderfall erläutert werden, bei dem es zu einer Falschzählung (der Quadranten) und damit zu einem Verlust der absoluten Position kommen kann. Dieser Sonderfall tritt ein, wenn eine Richtungsänderung auftritt, während sich der Impulsdraht 36 zwischen den Zuständen Z2 und Z3 der Fig. 2A befindet.

Bezugnehmend auf Fig. 5 ist wieder der sinusförmige Magnetfeldverlauf 50 der Fig. 4A und 4B gezeigt, der am Ort des Impulsdrahtsensors 12 bei einer kontinuierlichen Drehung der Geberwelle 18 bzw. des Erregermagneten 16 ohne Richtungsänderung herrscht. Die Amplituden der Stärke des externen Magnetfelds 40 liegen bei "max. +" und "max. -". Ebenso ist die Zündschwelle 54 des Kerns 48 und eine Zündschwelle 56 des Mantels 46 des Impulsdrahts 36 in Form von horizontalen Hilfslinien gezeigt, bei denen die Magnetisierung bzw. die Feldrichtung 44 (vgl. Fig. 2A) des Kerns 48 bzw. des Mantels 46 jeweils in Richtung des anliegenden externen Magnetfelds 40 umklappt. Zum Zwecke einer einfacheren Verständlichkeit der nachfolgenden Erläuterungen ist eine jeweilige Magnetisierung des Kerns 48 und des Mantels 46 an bestimmten Punkten Px.x des Magnetfeld- und Signalverlaufs 50 bzw. 51 gezeigt. Q1 bis Q4 bezeichnen die 90°-Quadranten einer vollständigen 360°-Umdrehung und repräsentieren auch die oben erwähnten zwei MSB des fein auflösenden ST-Sensors.

Wenn in der Fig. 5 der bipolare Erregermagnet 16 beginnend beim Nulldurchgang (P0) stetig ohne Richtungsänderung in eine feste Richtung gedreht wird, so dass die Sinuskurve immer von links nach rechts durchlaufen wird, wird der Impulsdraht 36 mit der dargestellten sinusförmigen Magnetfeldstärke und Polarität beaufschlagt. Hierbei werden nacheinander wiederkehrend die Punkte P0, P1.1, P1.2, P2.1, P2.2 durchlaufen. Die Punkte P1.1, P1.2, P2.1 und P2.2 entsprechen Ummagnetisierungen des Kerns 48 (P1.1 und P2.1) bzw. des Mantels 46 (P1.2 und P2.2). Dabei nehmen der Kern 48 und der Mantel 46 in diesen Punkten die jeweils dargestellten Feldrichtungen 44 an (Darstellung analog zur Fig. 2A). Beim Durchschreiten der Zündschwellen 54 des Kerns 48 wird jeweils ein energiereicher großer Impuls 52 (vgl. Variante 1 in Fig. 2B) vom Impulsdrahtsensor 12 abgegeben (vgl. Fig. 4A), der je nach Polarität des externen Magnetfelds 40 ein positives oder negatives Vorzeichen hat. Diese Ummagnetisierungsimpulse 52-1 bzw. 52-2 werden dann gemäß dem oben beschriebenen Verfahren für die (Spannungs-)Versorgung zur Zählung der vollständigen 360°-Umdrehungen verwendet, während eine externe Spannungsversorgung (in den Figuren nicht gezeigt) des MT-Drehgebers 10 abgeschaltet ist. Die beim Erreichen der Zündschwellen 56 des Mantels 46 generierten, relativ kleinen und energiearmen Impulse (vgl. Variante 3 in Fig. 2B) können nicht verwendet werden, da sie für eine Signalauswertung nicht ausreichend Energie aufweisen.

Bezug nehmend auf Fig. 6 ist einer von mehreren möglichen Sonderfällen gezeigt, bei dem nach einer Richtungsänderung, die zwischen P1.1 und P1.2 stattfindet, die Zählung der vollständigen 360°-Umdrehungen zunächst ohne eine externe Spannungsversorgung fortgesetzt wird. Die externe Spannungsversorgung wird eingeschaltet, wenn die Geberwelle 18 weniger als ca. 180° nach der Richtungsumkehr zurückgelegt hat, so dass der Umdrehungszähler 76 mit dem fein auflösenden ST-Sensor (xMR-Element 14) synchronisiert werden muss, damit die Gesamtposition aus der Anzahl der 360°- bzw. 180°-Umdrehungen und einer aktuellen ST-Position (absoluter Drehwinkel) korrekt errechnet werden kann und keine Unstetigkeiten zeigt. Bei einem Weg von mehr als 180° wird entweder der Punkt P2.2 oder P4.1 überfahren, der dann einen eindeutig auswert- und zuordenbaren Ummagnetisierungsimpuls 52 bzw 52' liefert.

Beim sequentiellen Durchfahren der Punkte P0, P1.1, Richtungsumkehr, P3.1, P3.2 mit einem nachfolgenden Halt im Quadranten Q4 bzw. in einer "undefinierten Zone 1'" (Px1), wobei in der Halteposition die externe Spannungsversorgung eingeschaltet wird, entsteht folgender Ablauf:
- Bei einer Rotation des externen Magnetfelds 40 von P0 nach P1.1 klappt der Kern 48 gegen die Mantelrichtung um und liefert, wie gewünscht, einen großen Ummagnetisierungsimpuls 52-1 (vgl. Fig. 4A).
- Bei einer (sofort) darauf folgenden gegensinnigen Rotation des externen Magnetfelds 40 von P1.1 nach P3.1 klappt der Kern 48 erneut dort um, allerdings in die ursprüngliche, bisher unveränderte Mantellrichtung, und liefert dabei einen (unerwünscht niedrigen) Ummagnetisierungsimpuls (vgl. Variante 2 in Fig. 2B) mit einem mittleren Energiegehalt, der energetisch nicht ausreicht, um für eine kurze Zeitdauer ausreichend Energie bereitzustellen, die für eine Zählung der 360°-Umdrehungen erforderlich ist. Der Quadrant Q1 wird aufgrund der mittleren Impulshöhe nicht "gesehen" bzw. nicht erfasst, wie es eigentlich erforderlich wäre, um die Quadrantenhistorie sicher und eindeutig fortzuführen.

- Bei einer fortgesetzten Rotation (ohne weitere Richtungsänderung) vom Punkt 3.1 über den Punkt 3.2 (wo der vernachlässigbare kleine Impuls gemäß Variante 3 der Figur 2B entsteht) bis in den Quadranten Q4 der Fig. 4, also in die undefinierte Zone 1', entsteht das nachfolgend beschriebene Problem, wenn man die Rotation in der undefinierten Zone Z1 im Punkt Px1 stoppt und die externe Spannungsversorgung zwecks Ermittlung einer eindeutigen (Gesamt-)Position der Geberwelle 18 einschaltet.
- Die im Historienspeicher 78 aufgezeichnete Quadrantenhistorie der nacheinander durchlaufenden Quadranten Q1 bis Q4, die durch die beschriebene, kurzzeitige Positionsabfrage (Magnetfeldstärkenabfrage) des fein auflösenden ST-Sensors beim Erscheinen eines Ummagnetisierungsimpulses 52 bzw. 52' ermittelt wird, dient einerseits dazu, bei fehlender externer Spannungsversorgung den Umdrehungszähler 76 fortlaufend zu aktualisieren und zum Anderen, um beim Hinzuschalten der externen Spannungsversorgung den Umdrehungszähler 76 und den ST-Sensor (xMR-Element 14) zu synchronisieren. Zu diesem Zweck sind lückenlos mindestens zwei große Impulse (gemäß Variante 1 der Fig. 2B) je 360°-Umdrehung in einer (gleichbleibenden) Richtung erforderlich, um eine Eindeutigkeit des Zählvorgangs zu gewährleisten. Der Impuls in Q1 fehlt aber.

In der eben beschriebenen Situation tritt der Fall auf, dass nach dem Einschalten der externen Spannungsversorgung die ST-Position eindeutig auslesbar ist (vgl. Px1 bzw. Px2 im jeweiligen Quadrant Q4). Die aufgezeichnete Historie, insbesondere der zuletzt abgespeicherte Historienwert Q2, lässt jedoch keine eindeutige Aussage darüber zu, ob sich die Geberwelle 18, und damit der Erregermagnet 16, zuletzt um ca. 180° gegen den Uhrzeigersinn oder im Uhrzeigersinn gedreht hat. Der ST-Sensor liefert in beiden Fällen die gleiche externe Magnetfeldstärke bei Px1 bzw. Px2. Die Ursache für diese Ungenauigkeit ist darin zu sehen, dass der bei P3.1 ausgelöste Ummagnetisierungsimpuls mittlerer Größe keine Quadrantenermittlung durch den ST-Sensor zulässt, weil zu wenig Energie vorhanden ist.

Somit ist eine - zwar nur vorübergehende - Falschpositionsermittlung in einer Größe von ± 180° nach dem Einschalten der externen Versorgungsspannung möglich, so dass auch die Synchronisation mit dem Singleturn nicht fehlerfrei gegeben ist. Die Positionsermittlung ist aber nur vorübergehend falsch, da beim Überfahren der Punkte P2.1 bzw. P4.1 wieder große Ummagnetisierungsimpuls der Variante 1 (vgl. Fig. 2B) generiert werden, die eine Aktualisierung der zwischenzeitlich verlorengegangenen eindeutigen Information auslösen würden. Dies bedeutet, dass für ein reines Zählen ganzer 360°-Umdrehungen mit einer Genauigkeit von ± 180° auch nach dem Einschalten der Versorgungsspannung keine Korrekturmaßnahmen getroffen werden müssen, wenn die Geberwelle 18 nicht in den undefinierten Zonen steht.

Wird der Punkt P2.1 überfahren, wird im Quadrant Q4 ein großer Impuls erzeugt, aus dem geschlossen werden kann, dass die Sinuskurve weiterhin von links nach rechts durchlaufen wird. Wird hingegen der Punkt 4.1 überfahren, so wird ein großer Impuls im Quadrant Q3 generiert. Impulse in den Quadranten Q1 und Q3 bedeuten, dass die Sinuskurve von rechts nach links durchlaufen wird, das heißt eine Richtungsänderung stattgefunden hat, wenn der zuletzt gespeicherte Quadrantenwert Q2 war.

Die undefinierten Zonen Z1 und Z2 sind durch die Zündschwellen 54 des Kerns 48 bedingt. Die undefinierte Zone 1 erstreckt sich mindestens vom Punkt P4.1 bis zum Punkt P', wobei der Punkt P' dem Punkt P2.1 im darauffolgenden Zyklus entspricht. Analoges gilt für die undefinierte Zone Z2, deren minimale Erstreckung vom Punkt P2.1 zum Punkt P2' reicht, wobei der Punkt P" dem Punkt P4.1 eines vorhergehenden Zyklus entspricht. Wenn man Hysteresen zusätzlich sicher berücksichtigen möchte, die z.B. durch Temperaturschwankungen des ST-Sensor bedingt sind, kann die rechte Grenze der undefinierten Zone Z1 auf das Ende des vorhergehenden Quadranten Q4 und die linke Grenze der undefinierten Zone Z2 auf den linken Rand des Quadranten Q3 erweitert werden, so dass man die undefinierten Zonen Z1' und Z2' erhält.

Es gibt nun verschiedene Möglichkeiten, trotz des in der Figur 6 veranschaulichten Problems, die Position des MT-Drehgebers 10 eindeutig zu bestimmen.

Bei einem ersten Lösungsweg wird die Spule 38 des Impulsdrahtsensors 12 kurzzeitig bestromt, um eine Reaktion auf einen zusätzlichen (Test-)Impuls als Zusatzsignal durch den Impulsdrahtsensor (12) zu erzeugen.

Ein Unterscheidungsmerkmal, das zu einer Eindeutigkeit bezüglich der undefinierten Zonen Z1 bzw. Z2 führt, ist die Tatsache, dass die jeweiligen Magnetisierungsrichtungen des Kerns 48 und des Mantels 46 in den beiden Zonen Z1 und Z2 unterschiedlich sind (vgl. Feldrichtungen 44 in Fig. 6 bei Px1 = P3.2 bzw. Px2 = P1.2).

Um diese Informationen extrahieren zu können, schlagen die Erfinder die folgende Vorgehensweise vor. Unmittelbar nach dem Einschalten der externen Versorgungsspannung wird in die bereits vorhandene Spule 38 ein kurzer elektrischer (Test-)Impuls mit einem vorgegebenen, quadrantenabhängigen Vorzeichen und vorgegebener Energie kurzzeitig eingekoppelt. Zu diesem Zweck kann z.B. in der Auswerteeinheit 15 ein entsprechender Schaltungsblock vorgesehen sein, der in Fig. 3 nicht expilzit gezeigt ist. Bei einer ausreichenden Stromstärke des Testimpulses wird in der Spule 38-neben dem externen Magnetfeld 40 - ein zusätzliches Magnetfeld erzeugt, das der Magnetisierung des Drahts 36 entweder entgegenwirkt oder sie verstärkt. Bei einer gegensinnigen Magnetrichtung der Spule 38 und bei einer geeigneten Dimensionierung des zusätzlichen Felds klappt die Magnetisierung des Kerns 48 schlagartig um und erzeugt eine kurze Magnetfeldänderung, die wiederum einen messbaren elektrischen Impuls in der Spule 38 erzeugt (Reaktionsimpuls, woraus das Zusatzsignal ermittelt wird). Dimensioniert man die Dauer des extern eingekoppelten elektrischen Testimpulses nicht zu lang, so kann der Reaktionsimpuls des Drahts 36 beim Umklappen gemessen werden. In Abhängigkeit davon, ob ein Reaktionsimpuls erzeugt wird oder nicht (Zusatzsignal), lässt sich eindeutig rückschließen, ob sich die Geberwelle 18 in der undefinierten Zone Z1 oder in der undefinierten Zone Z2 befindet. Auf diese Weise lässt sich die Eindeutigkeit des Umdrehungszählers 76 wieder herstellen. Somit ist auch die Synchronisation mit dem ST-Sensor bzw. dem xMR-Element 14 möglich.

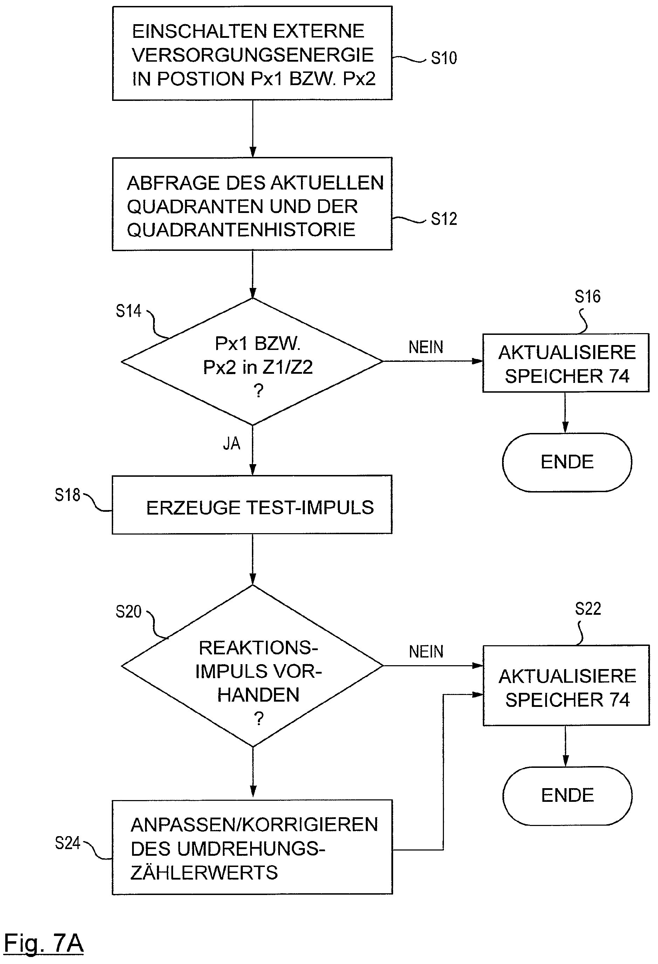

Fig. 7A zeigt ein Flussdiagramm, welches auf dem Signalverlauf der Fig. 6 sowie dem ersten Lösungsweg (Testimpuls über Spule 38) aufbaut. In diesem Fall wird vorausgesetzt, dass die Geberwelle 18 von links kommend den Punkt P0 bis zum Punkt P1.1 durchläuft, wo die Richtungsänderung stattfindet, bevor der Punkt P1.2 erreicht wird. Anschließend wird die Geberwelle 18 soweit gedreht, dass man auf der Kurve nach links bis zum Punkt Px1 gelangt, wo die Position der Geberwelle 18 abgefragt wird. Es ist zu beachten, dass die Geberwelle 18 zum Zwecke der Abfrage nicht zwingend angehalten werden muss. Wenn eine Abfrage im Punkt Px1 bzw. Px2 (vergleiche Fig. 6) stattfindet, wird der MT-Drehgeber 10 eingeschaltet, d.h. mit externer Energie versorgt. Dieser Zustand spiegelt sich im Flussdiagramm der Fig. 7A im Schritt S10 wieder. Sobald der MT-Drehgeber 10 mit einer externen Energie versorgt ist, kann die Auswerteeinheit 15 auf Basis der Quadrantenhistorie ermitteln, dass sich die Geberwelle 18 in der undefinierten Zone Z1 oder Z2 befindet. Der zuletzt abgespeicherte Quadrantenwert ist Q2 und wurde im Punkt P1.1 erhalten.

Da der zuletzt abgespeicherte Quadrant der Historie der Quadrant Q2 ist, ergibt sich daraus unmittelbar die undefinierte Zone Z1 bzw. Z2, die im Gegensatz zu den Zonen Z1' und Z2' gleich groß und deckungsgleich sind. Die undefinierten Zonen Z1 bzw. Z2 können für unterschiedliche "zuletzt abgespeicherte Quadranten" variieren. Jedem Quadranten kann eine eigene undefinierte Zone zugeordnet sein. Diese Zonen werden deshalb vorzugsweise vorab in einem Festwertspeicher, wie z.B. im Speicherelemente 74 oder in der Auswerteeinheit 15, hinterlegt.

Im Schritt S14 wird abgefragt, ob die externe Feldstärke bzw. der Punkt Px1 bzw. Px2 in der verbotenen Zone (Z1 oder Z2) für den Quadranten Q2 liegt. Wenn er sich außerhalb der verbotenen Zone befindet, ist die Zuordnung zwischen dem Messwert und dem zugehörigen Quadranten ohne Probleme möglich, so dass die eindeutige Position (Summe aus absolutem Drehwinkel und Anzahl der vollständig durchlaufenen 360°-Umdrehungen) unter zusätzlicher Berücksichtigung der Quadrantenhistorie ermittelt werden kann (Schritt S16). Ergibt die Abfrage im Schritt S14 jedoch, dass der Messwert in der undefinierten Zone liegt, wird im Schritt S18 der oben erwähnte Testimpuls auf die Spule 38 gegeben.

In einem nächsten Schritt S20 wird in diesem Fall abgefragt, ob ein Ummagnetisierungsimpuls aufgrund des Testimpuls als Reaktionsimpuls ausgelöst wurde. Wenn kein Reaktionsimpuls ausgelöst wurde, kann im Schritt S22 auf die herkömmliche Weise die eindeutige Position ermittelt werden (vergleiche Schritt S16). Anderenfalls wird der Wert des Umdrehungszählers 76 inkrementiert oder dekrementiert. Das Inkrementieren und Dekrementieren des Schritts S24 hängt von der aktuellen Drehrichtung 20 der Geberwelle 18 ab. Im Schritt S24 wird der Umdrehungszähler 76 allgemein angepasst.

Im Schritt S26 kann nach der allgemeinen Anpassung des Umdrehungszählers die eindeutige Position der Geberwelle 18 in Analogie zu den Schritten S16 bzw. S22 ermittelt werden.

Es versteht sich, dass die Polarität des zu erzeugenden zusätzlichen Magnetfelds in Abhängigkeit vom zuletzt abgespeicherten Quadrantenwert der Quadrantenhistorie ebenfalls in einem geeigneten Speicher vorab hinterlegt sein kann. Ferner versteht es sich, dass der Reaktionsimpuls als Zusatzsignal zur herkömmlichen Auswertung hinzugezogen wird.

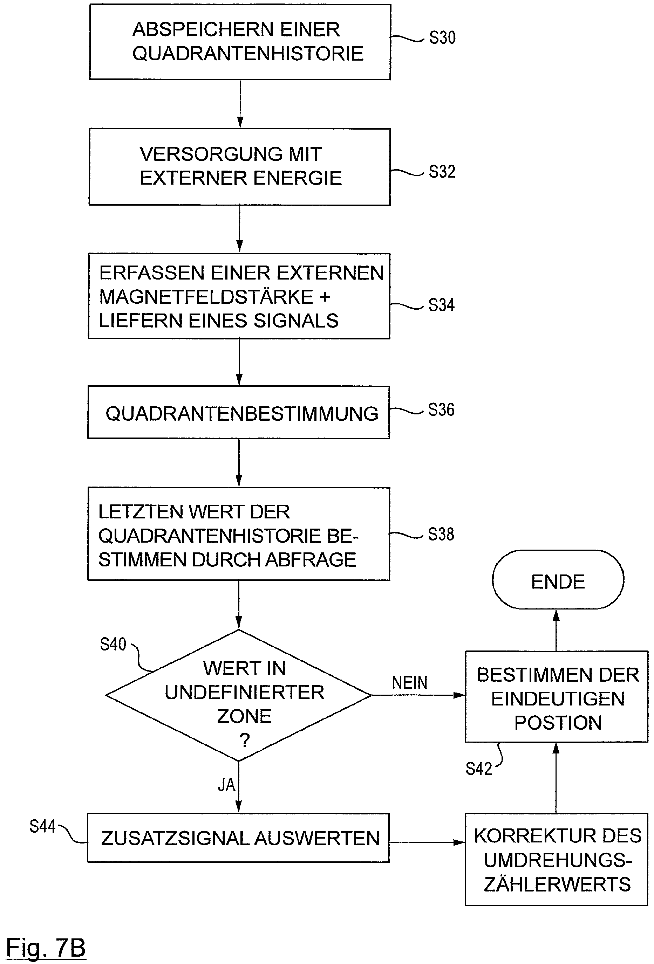

Das Flussdiagramm der Fig. 7B zeigt eine Verallgemeinerung des bisher beschriebenen Verfahrens zur Ermittlung einer eindeutigen Position der Geberwelle, die um die Drehachse 19 rotiert.

In einem Schritt S30 wird eine Historie von Quadrantenwerten im Historienspeicher hinterlegt bzw. abgespeichert, wobei jeder Quadrantenwert einem der Ummagnetisierungsimpulse 52, der im Impulsdrahtsensor 12 durch eine spezifische Änderung des externen Magnetfelds aufgrund einer Rotation der Geberwelle ausgelöst wird, entspricht, wobei jeder Quadrantenwert von der Auswerteeinheit 15 unter Berücksichtigung des aktuellen Signalwerts (Px2), der vom xMR-Element 14 aufgrund des Ummagnetisierungsimpulses 52 an die Auswerteeinheit 15 geliefert wird, bestimmt wird und an den Historienspeicher 78 geliefert wird.

Während einer Zeitdauer, die einen diskreten Zeitpunkt umfasst, für welchen die eindeutige Position der Geberwelle zu ermitteln ist, werden folgende Schritte durchgeführt. In einem Schritt S32 wird die Auswerteeinheit 15 und das xMR-Element 14 mit externer Energie versorgt. In einem Schritt S34 wird eine Stärke des externen Magnetfelds 40 zum diskreten Zeitpunkt mittels des xMR-Elements 14 erfasst und ein entsprechender Signalwert Px1 bzw. Px2 an die Auswerteeinheit 15 geliefert. In einem Schritt 36 wird mittels der Auswerteeinheit 15 bestimmt, in welchem der Quadranten Q1-Q4 der gelieferte Signalwert Px1 bzw. Px2 liegt. In einem Schritt S38 wird der letzte Quadrantenwert abgefragt, der in einem Historienspeicher 78 zuletzt in der Historie abgespeichert wurde, wobei die Abfrage durch die Auswerteeinheit 15 erfolgt.

In einem Schritt S40 wird durch die Auswerteeinheit 15 überprüft, ob der gelieferte Signalwert Px1 bzw. Px2 innerhalb der verbotenen Quadrantenzone Z1 oder Z2 liegt, die dem zuletzt abgespeicherten Quadrantenwert Q2 zugeordnet ist, wobei für jeden Quadrantenwert eine spezifisch verbotene Quadrantenzone vorab bestimmt und hinterlegt ist.

Wenn der gelieferte Signalwert Px1 bzw. Px2 außerhalb der verbotenen Quadrantenzone Z1 bzw. Z2 liegt, wird in einem Schritt 42 die eindeutige Position durch Summieren des absoluten Drehwinkels mit einem aktuellen Umdrehungszählerwert bestimmt. Anderenfalls wird in einem Schritt S44 ein Zusatzsignal ausgewertet, welches zusätzlich durch den Impulsdrahtsensor 12 erzeugt wird, wobei dieses Signal eine Korrektur des Umdrehungszählerwerts mittels der Auswerteeinheit 15 hervorruft und wobei der absolute Drehwinkel auf Basis des Zusatzsignals bestimmt wird, bevor die eindeutige Position aus dem absoluten Drehwinkel und dem korrigierten Drehwinkel bestimmt wird.

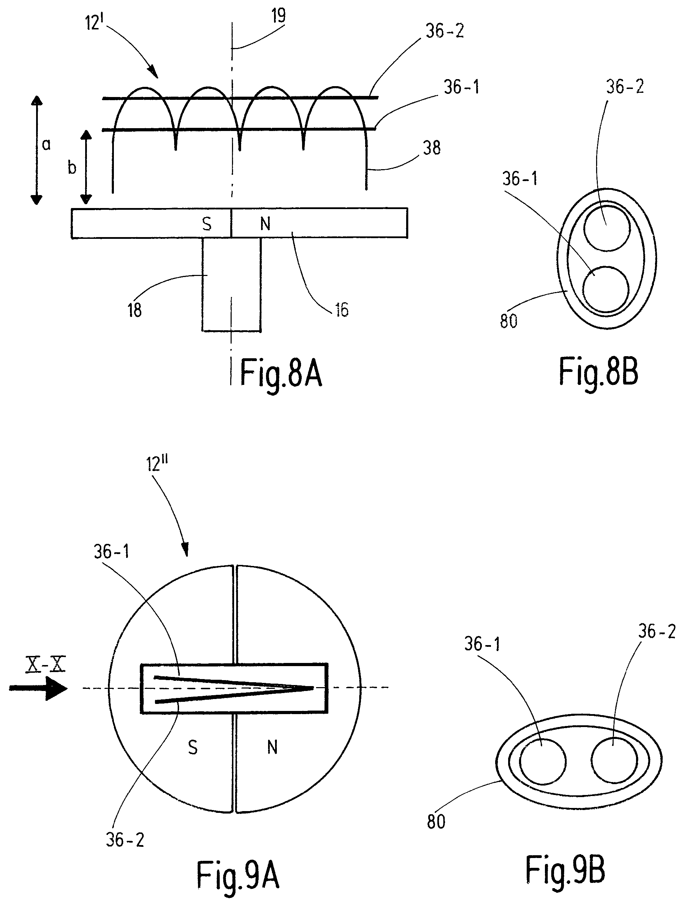

Ein zweiter Lösungsweg ist in den Fig. 8 und 9 gezeigt, bei der mindestens zwei Drähte 36 im Impulsdrahtsensor 12 zum Einsatz kommen.

In der Fig. 8A ist eine Seitenansicht eines stark vereinfacht dargestellten MT-Drehgebers 10 gezeigt, dessen Impulsdrahtsensor 12' zwei Impulsdrähte 36-1 und 36-2 sowie eine Spule 38 aufweist, die die Impulsdrähte 36-1 und 36-2 umgibt. In der Ansicht der Fig. 8B ist ein Querschnitt des Impulsdrahtsensors 12' der Fig. 8A gezeigt. Man erkennt, dass die beiden Impulsdrähte 36-1 und 36-2 übereinander angeordnet sind. Die Impulsdrähte 36-1 und 36-2 erstrecken sich im Wesentlichen parallel zueinander. Eine Längsrichtung der Drähte 36-1 und 36-2 ist senkrecht zur Drehachse 18 orientiert.

Wie zuvor im Zusammenhang mit Fig. 6 beschrieben, liegt ein ursächliches Problem bei der Signalauswertung darin, dass der Ummagnetisierungsimpuls 52 bzw. 52' im Quadrant Q1 beim Reversieren verlorengeht, weil an dieser Stelle nur ein mittlerer Impuls erzeugt wird, der energetisch für die erforderliche Auslwertung des entsprechenden Quadranten Q1 über den ST-Sensor bzw. das xMR-Element 14 nicht ausreicht.

Um dem entgegenzuwirken, kann der Impulsdrahtsensor 12' der Fig. 8 eingesetzt werden. Eine Besonderheit, dieses Impulsdrahtsensors 12' ist, dass er zwar nur eine einzige Spule 38, aber mindestens zwei Drähte 36-1 und 36-2 aufweist. Beide Drähte 36-1 und 36-2 geben die oben beschriebenen Ummagnetisierungsimpulse 52 bzw. 52' ab, wenn der MT-Drehgeber 10 gemäß der Anordnung der Fig. 1 mit dem Impulsdrahtsensor 12' der Fig. 8 eingesetzt wird. Da beide Drähte 36-1 und 36-2 jeweils die oben beschriebenen Ummagnetisierungsimpulse 52 bzw. 52' abgeben, erhält man typischerweise zwei Ummagnetisierungsimpulse 52 bzw. 52' je Quadrant.

Ein Wickelkörper 80, der beide Drähte 36 umgibt und der innerhalb der Spule 38 angeordnet ist, ist aus einem magnetisch nicht leitenden Werkstoff hergestellt, wie z.B. aus Edelstahl, Glas oder Kunststoff.

Durch die unterschiedliche relative räumliche Lage der Drähte 36-1 und 36-2 (vergleiche Abstände a und b in Fig. 8A) zum Erregermagnet 16 sind die Zündschwellen 54 und 56 für das Umklappen der jeweiligen Kerne 48 und Mäntel 46 zueinander verschoben. Bei einer entsprechenden Dimensionierung führt dies dazu, dass die in Fig. 6 gezeigten Punkte P1.1 und P1.2 des ersten Drahts 36-1 und die Punkte P1.1' und P1.2' des zweiten Drahts 36-2 in der Phase so zueinander verschoben sind, dass der Punkt 1.2' vor dem Punkt P1.1 liegt. Deshalb ist der oben geschilderte Sonderfall (d.h. Impuls mittlerer Energie) beim Reversieren für beide Drähte 36-1 und 36-2 nicht gleichzeitig möglich und das unerwünschte Fehlerbild kann maximal nur bei einem der Drähte 36-1 und 36-2 vorkommen. Somit wird auch beim Reversieren mindestens ein großer Ummagnetisierungsimpuls in einem der beiden Drähte 36-1 und 36-2 erzeugt, so dass die Quadranten eindeutig erfasst werden können. Alternativ ist die Quadrantenhistorie eindeutig und kann nach dem Einschalten der externen Versorgungsspannung zusammen mit der aktuellen ST-Position benutzt werden, um die Eindeutigkeit und Stetigkeit der eigentlich zu erfassenden (Gesamt)Position wieder herzustellen.

Eine weitere Alternative zum zweiten Lösungsweg der Fig. 8 ist in den Fig. 9A und 9B gezeigt. Die Fig. 9A zeigt eine Draufsicht auf einen Impulsdrahtsensor 12" mit mindesten zwei Drähten 36, wobei die Spule 36 nicht dargestellt ist. Die Fig. 9B zeigt einen Querschnitt von Drähten 36-1 und 36-2, die hier nebeneinander angeordnet sind. Bei der Fig. 8 waren die Drähte 36-1 und 36-2 übereinander angeordnet. Die Drähte 36-1 und 36-2 der Fig. 9 liegen in einer Ebene, die parallel zur Rotationsebene 32 (vergleiche Fig. 1) angeordnet ist. Die Drähte 36-1 und 36-2 der Fig. 9 sind innerhalb ihrer Anordnungsebene nicht parallel, sondern schließen miteinander einen Winkel ein. Wenn mehr als zwei Drähte 36 benutzt werden, so sind alle Drähte 36 nicht parallel zueinander orientiert, sondern weisen jeweils einen Winkel zu ihren Nachbarn auf. In der Fig. 9A sind die beiden Drähte 36-1 und 36-2 exemplarisch V-förmig angeordnet.

Durch die unterschiedliche relative Winkellage der Drähte 36-1 und 36-2 sind die Zündschwellen 54 und 56 für das Umklappen der Mäntel 46 und der Kerne 48 wiederum leicht zueinander verschoben. Es stellt sich der gleiche Effekt wie beim Impulsdrahtsensor 12' der Fig. 8 ein.

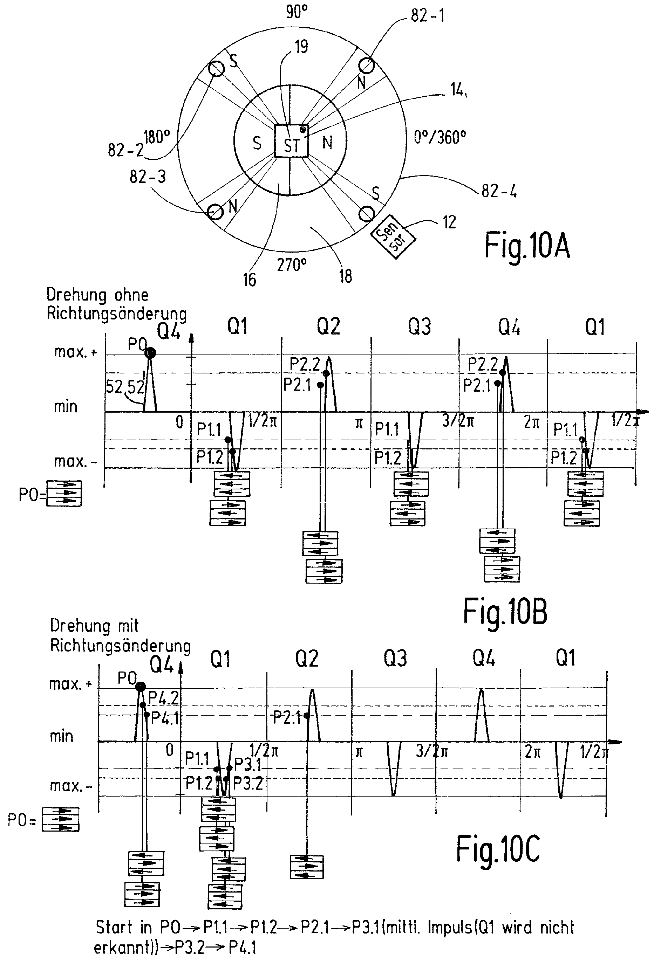

Ein dritter Lösungsweg ist in Fig. 10 gezeigt. Der MT-Drehgeber 10 der Fig. 10A ist grundsätzlich gemäß der Anordnung der Fig. 1 aufgebaut, wobei neben dem zentrisch angeordneten Erregermagneten 16 weitere Zusatzmagnete 82 gezeigt sind. Fig. 10A zeigt eine Draufsicht auf den MT-Drehgeber 10 mit mehreren Zusatzmagneten 82. Fig. 10B zeigt den Magnetfeldverlauf bei einer Drehung der Geberwelle 18 ohne Richtungsänderung. Fig. 10C zeigt den Magnetfeldverlauf bei einer Drehung mit einer Richtungsänderung.

Bezug nehmend auf Fig. 10A wird nachfolgend der Aufbau des MT-Drehgebers 10 beschrieben, sofern Änderungen gegenüber dem Aufbau gemäß der Fig. 1 betroffen sind. Der Erregermagnet 16 und das xMR-Element 14 (ST-Sensor) sind weiterhin zentrisch angeordnet. Der Impulsdrahtsensor 12 ist radial versetzt, d.h. exzentrisch angeordnet. Neben dem zentralen Erregermagnet (Dipol) 16 kommen mehrere Zusatzmagneten 82, hier insgesamt vier Zusatzmagneten 82-1 bis 82-4, zum Einsatz. Die Zusatzmagneten 82 sind ebenfalls radial versetzt zur Drehachse 19 entlang einer Umfangsrichtung der Geberwelle 18 angeordnet. Die Zusatzmagneten 82 sind hinsichtlich ihrer Winkellage vorzugsweise gleich zueinander beabstandet. Die zusätzlichen Magnetfelder der Zusatzmagneten 82 sind im Wesentlichen parallel zur Drehachse 19 ausgerichtet, wohingegen das externe Magnetfeld 40 des Erregermagneten 16 weiterhin senkrecht zur Drehachse 19 orientiert ist. Die Zusatzmagneten 82 sind mit wechselnder Polarität (siehe N bzw. S) zu ihrem jeweiligen Nachbarn angeordnet. Es versteht sich, dass der Impulsdrahtsensor 12 entsprechend orientiert ist, um die zusätzlichen Magnetfelder der Zusatzmagnete 82 erfassen zu können. Dies bedeutet in diesem Fall, dass der oder die Drähte 36 parallel zur Drehachse 19 orientiert ist bzw. sind.

Wie zuvor beschrieben, liegt ein ursächliches Problem darin, dass einer der großen Ummagnetisierungsimpulse 52 bzw. 52' in der Fig. 6 beim Reversieren verlorengeht, weil unter den oben beschriebenen besonderen Voraussetzungen nur ein mittlerer Impuls anstatt des großen Impulses erzeugt wird. Der mittlere Impuls reicht energetisch für die erforderliche Auslesung des entsprechenden Quadranten über das xMR-Element 14 in der Regel nicht aus.

Um dem entgegenzuwirken, kommen die exzentrisch angeordneten Zusatzmagneten 82 zum Einsatz. Die Zusatzmagnete 82 dienen allein zur Ansteuerung (Energieerzeugung) des Impulsdrahtsensors 12. Der zentrisch angeordnete Dipol verbleibt für die ST-Messung. Die zusätzlichen Zusatzmagnete 82 sind (radial oder axial) diskret realisiert und in einem nicht näher gezeigten Aufnahmeflansch der Geberwelle 18 integriert. Die Zusatzmagnete 82 können aber z.B. auch als Multipolring ausgestaltet sein.

Die in der Fig. 10A gezeigte Anordnung der Zusatzmagnete 82 gewährleistet bei einer 360°-Drehung der Geberwelle 18 in jedem Quadranten Q1-Q4 einen Ummagnetisierungsimpuls 52 bzw. 52' in den Punkten P1.1, P2.1, usw. (vergleiche Fig. 10B). Bei einer Revision der Drehrichtung kann jedoch die Erfassung des entsprechenden Quadranten ausfallen (vergleiche Fig. 10C).

Dieses Fehlverhalten kann mittels Software bei jedem (großen) Ummagnetisierungsimpuls 52 abgefangen werden, indem die Quadrantenhistorie berücksichtigt wird (z.B. die beiden letzten Quadranten oder optional der letzte Quadrant und die zuletzt ermittelte Drehrichtung). Zu diesem Zweck können die entsprechenden Informationen mit jedem großen Ummagnetisierungsimpuls 52 bzw. 52' zwischengespeichert werden. Aufgrund der Tatsache, dass beim Einschalten der externen Versorgungsspannung der aktuelle Quadrant über den ST-Sensor eindeutig ermittelt werden kann, und aufgrund der Tatsache, dass die Quadrantenhistorie hinterlegt ist, ist auch eine Synchronisation der ST-Position mit dem Umdrehungszähler möglich.

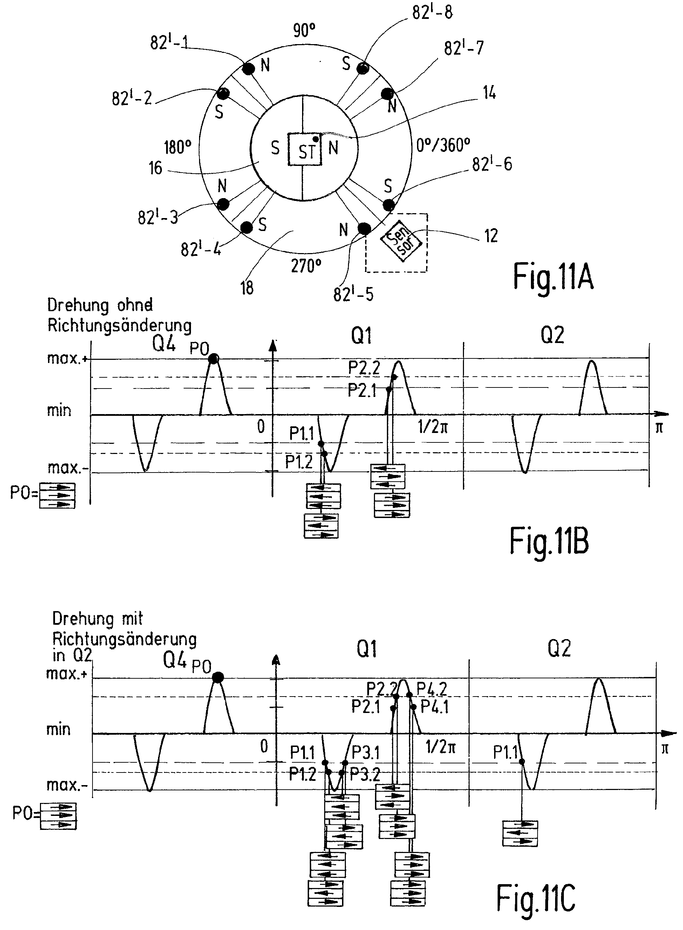

In der Fig. 11 ist ein vierter Lösungsweg gezeigt, der sich am Aufbau der Fig. 10 anlehnt, wobei aber ein acht- oder mehrpoliger Zusatzmagnet 82' zum Einsatz kommt. Fig. 11A zeigt eine Draufsicht. Fig. 11B zeigt eine Drehung ohne Richtungsänderung. Fig. 11C zeigt eine Drehung mit Richtungsänderung im Quadranten Q1.

Wie beim dritten Lösungsweg basiert der vierte Lösungsweg auf einem mehrpoligen Zusatzmagnet 82' für die Umdrehungszählung. In der Fig. 11A sind in der Umfangsrichtung acht (oder noch höherpolige) Zusatzmagnete 82'-1 bis 82'-8 vorgesehen. Diese Anordnung der Zusatzmagnete 82' gewährleistet bei einer 360°-Umdrehung mindestens einen, typischerweise zwei große Ummagnetisierungsimpuls 52 bzw. 52' in jedem Quadranten Q1-Q4 (vergleiche Fig. 11 B). Bei einer Revision der Drehrichtung kann zwar auch wieder vereinzelt ein mittlerer Ummagnetisierungsimpuls anstatt eines großen Ummagnetisierungsimpuls entstehen. Da jedoch pro Quadrant Q1-Q4 typischerweise zwei große Ummagnetisierungsimpulse 52 bzw. 52' generiert werden, ist sichergestellt, dass mit dem mindestens einen großen Ummagnetisierungsimpuls 52 bzw. 52' der jeweilige Quadrant Q1 bis Q4 erfasst werden kann. Die Zusatzmagneten 82' liefern also das oben erwähnte Zusatzsignal.

Somit erübrigt sich beim vierten Lösungsweg, sowohl für eine reine Umdrehungszählung ohne externe Versorgungsspannung als auch für die Synchronisation mit dem ST beim Einschalten der externen Versorgungsspannung, jede Hardware- oder Software-Korrekturmaßnahme. Es ist der Versatz der Nulldurchgänge zwischen dem ST und dem Umdrehungszähler zu berücksichtigen. Die acht Zusatzmagneten 82'-1 bis 82'-8 können in 45°-Winkelsegmenten angeordnet sein, wie es in Fig. 11A beispielhaft dargestellt ist. Die Zusatzmagneten 82' können aber auch in einer anderen Winkelanordnung angeordnet werden, falls dies für die Ansteuerung des Impulsdrahtsensors 12 vorteilhafter ist.

Zusammenfassend lässt sich zu den hier exemplarisch skizzierten vier Lösungswegen sagen, dass sie alle auf einem Quadrantensystem aufbauen. Dieses System lässt sich auch auf andere Bezugssysteme übertragen, z.B. auf 120°-segmentierte Systeme. Daraus lässt sich beim Erfassen der "Segmenthistorie" der 120°-Segmente ebenfalls die Umdrehungszählung und die Drehrichtungserkennung ableiten. Im Fall des vierten Lösungswegs mit acht Zusatzmagneten 82' werden dann nur sechs Magnete für das gleiche Lösungsprinzip benötigt. Allerdings bringt ein derartiges, nichtbinäres Bezugssystem in der Regel größere Nachteile bei den nachfolgenden Korrekturalgorithmen für die Umdrehungszählung oder bei der Synchronisation mit dem ST mit sich. Binäre Werte können schneller und energieeffizienter verarbeitet werden.

Anstatt vollständige Umdrehungen zu umfassen, sind natürlich auch Winkelsegmente einer ganzen Umdrehung zählbar. In diesem Fall sollte das entsprechende Winkelsegment absolut kodiert sein. Dieses Prinzip kann dann auch auf lineare Messsysteme übertragen werden. In diesem Fall werden lineare, absolut kodierte Teilsegmente gezählt und eine Gesamtposition wird aus der gezählten Segmentzahl und der aktuellen Segmentposition ermittelt.

Alle axial orientierten Zusatzmagnete 82 bzw. 82' der Fig. 10 und 11 beim dritten und vierten Lösungsweg können natürlich auch radial orientiert sein.

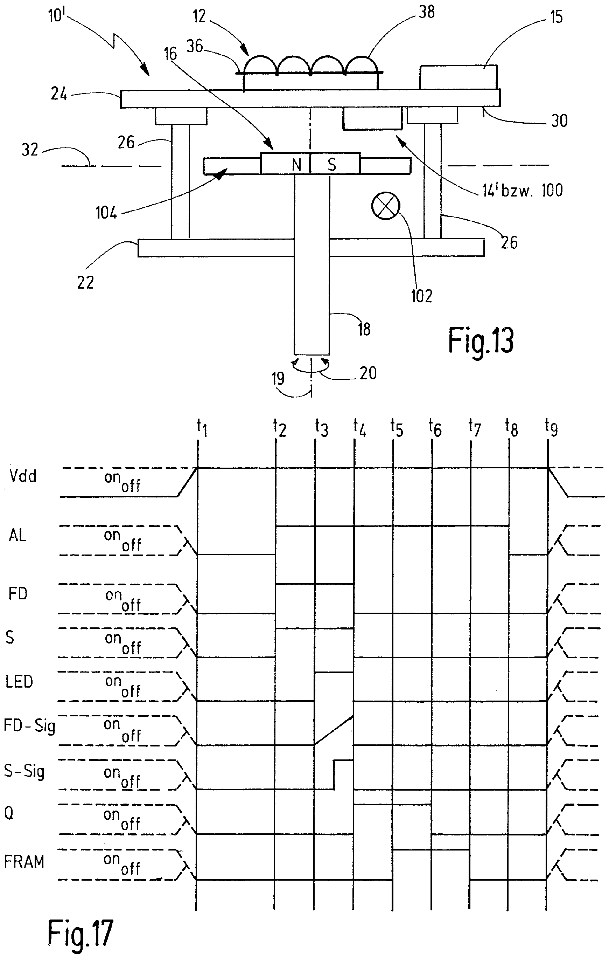

Basierend auf der gezeigten Mehrpoltechnik für die Umdrehungszählung gemäß dem dritten oder vierten Lösungsweg ist auch ein Hohlwellengeber realisierbar. In diesem Fall kann der zentrisch sitzende Dipolmagnet durch eine ring- oder scheibenförmig ausgestaltete, absolut-kodierte Maßverkörperung für den ST-Sensor ersetzt werden (vgl. Fig. 12). Diese Maßverkörperung muss nicht zwingend magnetisch sein, sondern kann z.B. kapazitiv kodiert sein und mit einem entsprechenden ST-Sensor wechselwirken, sofern dieser ST-Sensor mit einer entsprechenden niedrigen Energie betrieben werden kann. Dazu werden im Nachfolgenden noch nähere Erläuterungen unter Bezugnahme auf die Figuren 13 ff gegeben werden.

Bei dem dritten und vierten Lösungsweg sind die Zusatzmagnete 82 bzw. 82' für den Impulsdrahtsensor 12 radial orientiert und die absolut kodierte Maßverkörperung ist axial orientiert. Grundsätzlich können diese Orientierungen auch vertauscht werden. Alternativ können beide Orientierungen axial oder radial realisiert werden.

In Fig. 12 ist eine Draufsicht auf eine weitere Ausführungsform des MT-Drehgebers 10 gezeigt, bei der die absolut kodierte ST-Maßverkörperung, die dem Erregermagnet 16 der Fig. 1 entspricht, in Form eines Magnetrings realisiert ist. In diesem Fall ist das xMR-Element 14 exzentrisch über dem Ring angeordnet.

In dem nachfolgenden Abschnitt der Beschreibung wird Bezug nehmend auf die Fig. 13 bis 18 der Aufbau und die Funktionsweise eines optischen MT-Drehgebers 10' (vergleiche Fig. 13) erläutert werden, der eine Maßverkörperung aufweist, die - anstatt wie bisher magnetisch - nun optisch kodiert ist und mit einem entsprechenden ST-Sensor 14' bzw. 100 wechselwirkt.

In der Fig. 13 ist der Aufbau des optisch wirkenden MT-Drehgebers 10' gezeigt, der nahezu identisch zu dem Aufbau des MT-Drehgebers 10 der Fig. 1 ist. Der einzige Unterschied ist im optischen ST-Sensor 14' zu sehen, der hier in Form eines optischen Sensors 100 (z.B. in Form einer Fotodiode) realisiert ist. Der optische Sensor 100 kann wieder, ähnlich dem xMR-Element 14 der Fig. 1, auf der Unterseite 30 der Leiterplatte 24 angeordnet sein. Der optische Sensor 100 liegt einer Lichtquelle (z.B. LED) gegenüber. Zwischen dem optischen Sensor 100 und der Lichtquelle 102 ist eine Kodierscheibe 104 vorgesehen, die nachfolgend noch näher erläutert werden wird. Die optische Kodierscheibe 104 erstreckt sich in der Rotationsebene 32 des Erregermagneten 16, der hier wiederum in Form eines (permanenten) Dipols realisiert ist. Der Erregermagnet 16 ist zentrisch zur Drehgeberwelle 18 angeordnet. Der optische Sensor 100 und die Lichtquelle 102 sind exzentrisch zur Drehachse 19 angeordnet.

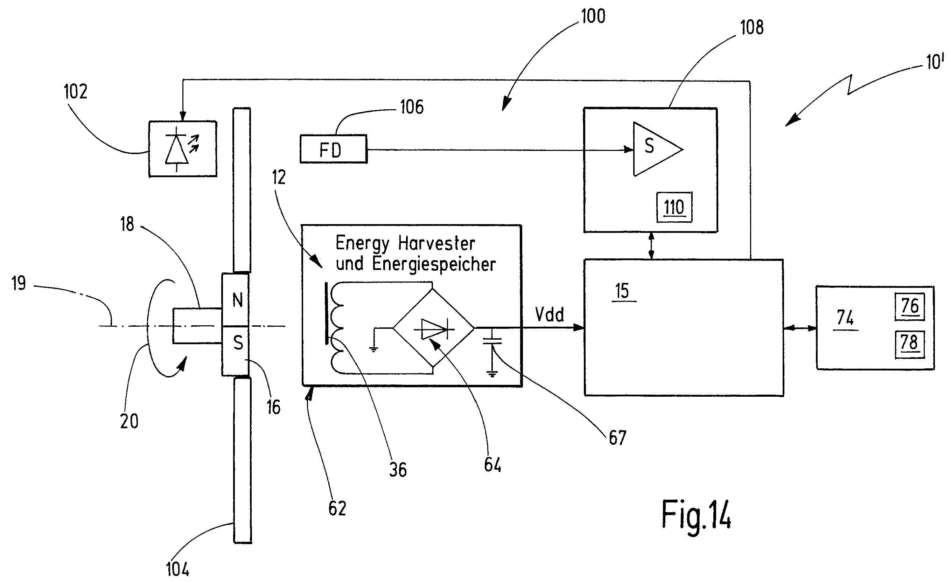

Für die nachfolgende Betrachtung des MT-Drehgebers 10' der Fig. 13 und 14 sind die folgenden Eigenschaften von Interesse:
- Der Draht 36 besitzt einen hartmagnetischen Mantel 46 und einen weichmagnetischen Kern 48 und stellt somit ein bistabiles magnetisches Element dar. Ein äußeres Magnetfeld 40 mit einer bestimmten Stärke und einer dem Impulsdraht 36 entgegengesetzten Magnetisierungsrichtung lässt die Magnetisierungsrichtung des Drahts 36 schlagartig umklappen, (Wigand-Effekt).
- In einer um den Draht 36 gewickelten Spule 38 induziert eine magnetische Flussänderung, die durch eine Rotation der Geberwelle 18 bzw. des Erregermagnets 16 hervorgerufen wird, einen ca. 20 µs langen elektrischen Ummagnetisierungsimpuls.
- Der Energiegehalt eines solchen Ummagnetisierungsimpulses liegt im Bereich 40 bis 150 nWs und hängt u.a. von der Impulsdrahtlänge, Kennzahlen der Spule 38, Lastwiderständen und dergleichen ab.
- Eine Länge des Ummagnetisierungsimpulses und ein Energiegehalt desselben sind weitgehend von der Änderungsgeschwindigkeit des Erregermagneten 16 unabhängig.

In Fig. 14 ist ein Blockdiagramm des MT-Drehgebers 10' der Fig. 13 gezeigt. Der erste Block 62 der Fig. 14 ist identisch zum Block 62 der Fig. 3 aufgebaut. Der optische Sensor 100 kann eine Fotodiode 106 und einen Block 108 zur Signalerzeugung aufweisen. Der Block 108 kann auch ein Register 110 zur Speicherung spezieller Werte aufweisen, auf welches nachfolgend noch näher eingegangen werden wird.

Während die externe Spannungsversorgung abgeschaltet ist, muss auch bei der optischen Lösung zumindest die Umdrehungszählung energieautark ablaufen. Der Impulsdrahtsensor 12 wandelt die kinetische Energie der Wellenbewegung pulsartig in elektrische Energie um und stellt sie den Komponenten 62, 100, 15 und 74 zur Verfügung. Wiederum steht nur äußerst wenig Energie (40-150 nWs) für die Umdrehungszählung während einer abgeschalteten externen Spannungsversorgung zur Verfügung. Dies bedeutet, dass der komplette Umdrehungszählprozess vom Energiegehalt eines Ummagnetisierungsimpulses leben muss, der z.B. im Kondensator 67 zwischengespeichert werden kann. Auch beim hier beschriebenen Lösungsweg wird der Impulsdrahtsensor 12 ausschließlich als Generator verwendet. Alle erforderlichen Informationen für die Umdrehungszählung und die Feinpositionsermittlung werden aus dem Signal des optischen ST-Sensors 14' abgeleitet. Wie oben bereits erläutert, werden weitere Hilfssensoren, wie z.B. Hall-Schalter, für die Umdrehungszählung nicht benötigt und sind überflüssig. Dies ermöglicht eine kostengünstige und Bauteil-reduzierte Ausgestaltung. Auch vereinfacht dies die Dimensionierung und Ausgestaltung des Erregermagneten 16 in Bezug auf den Impulsdrahtsensor 12, da nur die Energiebilanz-relevanten Aspekte berücksichtigt werden müssen und nicht zusätzlich Signal-bezogene Randbedingungen berücksichtigt werden müssen.

Für die Umdrehungszählung ist aber allgemein ein ST-Sensor erforderlich, der mit äußerst geringer Energie auskommt. Dies ist insbesondere bei optischen Sensoren nicht selbstverständlich, da Lichtquellen generell sehr viel Energie verbrauchen. Selbst moderne hocheffiziente Halbleiterdioden (z.B. LED) benötigen in einem herkömmlichen ST-Drehgeber einen Strom in einer Größenordnung von 2 mA bis 40 mA. Dies ist aber mehr als der Impulsdrahtsensor 12 liefern kann. Ferner wird weitere Energie für die anderen Systemkomponenten, insbesondere für die Signalauswertung und -speicherung, benötigt.

Bei der nachfolgend beschriebenen Lösung werden einzelne Funktionsmodule, wie z.B. eine Lichtquelle 102, eine optische Signalkonditionierung im Block 108 und das Speicherelement 74 nur sehr kurzzeitig durch die Auswerteeinheit 15 aktiv geschaltet, d.h. mit Energie versorgt. Sehr kurzzeitig bedeutet, dass die Energie zeitlich für das Funktionsmodul wesentlich kürzer zur Verfügung steht als der Ummagnetisierungsimpuls. Eine Zeitdauer der Aktivität der Funktionsmodule ist prinzipiell nicht an ein festes Zeitraster gebunden, sondern nur daran, wie lange sie für die Verarbeitung ihrer jeweiligen Aufgabe benötigen.

Nachfolgend wird die Wirkungsweise des MT-Drehgebers 10' auf Basis eines Impulsdrahtsensors 12 als Energielieferant und auf Basis einer optischen Sensorik sowohl für die Umdrehungszählung als auch für die Ermittlung der genauen Feinposition innerhalb einer 360°-Umdrehung unter Bezugnahme auf die Fig. 13 bis 18 erläutert werden.

Während einer Umdrehungszählung ohne externe Versorgungsspannung wird die Energie für die Ermittlung der Anzahl von 360°-Umdrehungen aus der mechanischen Bewegung der Geberwelle 18 gewonnen, an der der Erregermagnet 16 drehfest befestigt ist. Im symmetrischen Betrieb des Impulsdrahtsensors 36 wird beim kontinuierlichen Drehen des bipolaren Erregermagnets 16 über 360° je ein positiver und ein negativer Ummagnetisierungsimpuls 52 bzw. 52' beim Überschreiten der erforderlichen Zündschwellen 54 (vergleiche Fig. 4A) erzeugt. Wiederum ist der MT-Drehgeber 10' so dimensioniert, dass die Zündschwellen 54 möglichst mittig in den Quadranten Q1-Q4 liegen. Dadurch erhält der MT-Drehgeber 10' eine maximale Toleranzbandbreite von ± 45° zwischen der Winkellage des Impulsdrahtsensors 12 und des optischen ST-Sensors 14' (vergleiche Fig. 13). Auf diese Weise ist auch der Zusammenbau der Komponenten des MT-Drehgebers 10' einfach. Der MT-Drehgeber 10' ist über weite Temperaturbereiche stabil.

Unmittelbar nach einer Betriebsbereitschaft der Auswerteeinheit 15, was nach dem Erzeugen eines Ummagnetisierungsimpulses erfolgt, wird die Position des optischen ST-Sensors 14' bzw. 100 abgefragt. Gleiches gilt für den Quadrant Q1-Q4, in welchem der Ummagnetisierungsimpuls 52 bzw. 52' zuletzt ausgelöst wurde. Aus dem Speicherelement 74 (vergleiche Fig. 14) wird der alte Status (Quadrantenhistorie des zuletzt gespeicherten Quadranten und der Umdrehungszählerstand) ausgelesen. Aus diesen Informationen lässt sich in Übereinstimmung mit Fig. 7 eindeutig eine der folgenden Aktionen ableiten:
- Es wird lediglich die Quadrantenhistorie aktualisiert.
- Der Umdrehungszähler 76 wird um eine halbe Umdrehung inkrementiert und die Quadrantenhistorie wird aktualisiert.
- Der Umdrehungszähler wird um eine halbe Umdrehung dekrementiert und die Quadrantenhistorie wird aktualisiert.

Danach wird der Status (Quadrantenhistorie und Umdrehungszählerstand) gemäß den neuen Daten aktualisiert und die aktualisierten Daten werden im Speicherelement 74 gespeichert.

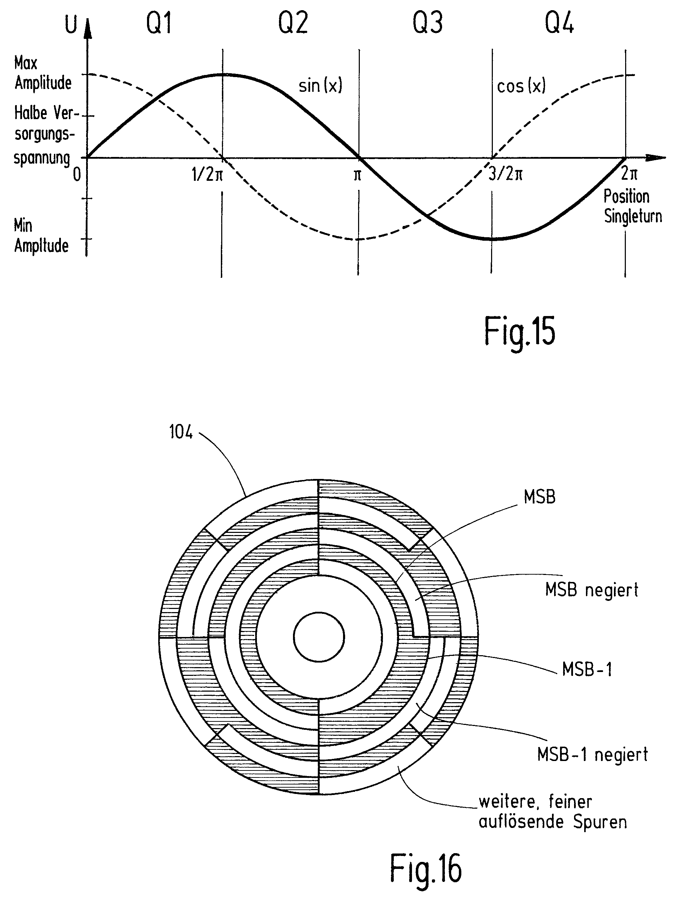

Die Quadranten Q1-Q4 entsprechen vier Winkelbereichen des sinusförmig verlaufenden externen Magnetfelds 40 bei der Drehung der Geberwelle 18 bzw. des Erregermagnets 16 (vergleiche Fig. 4A). Bei einer entsprechenden Ausrichtung des 360°messenden optischen ST-Sensors 100 relativ zum Impulsdrahtsensor 12 entspricht die Lage der beiden MSB der ST-Position gleichzeitig (zumindest in etwa) der Lage der 90°Quadranten des Sinusverlaufs des externen Magnetfelds 40. Daher genügt es im Betrieb ohne eine externe Versorgungsspannung, nur die beiden MSB der ST-Position zu ermitteln. Mit einer digital kodierten Kodierscheibe 104 können also beide MSB direkt ausgelesen werden (vergleiche Fig. 16).

Bei einer analog kodierten Kodierscheibe, z.B. als ein Sinus-Signal bzw. Kosinus-Signal je 360°-Umdrehung (vergleiche Fig. 4B), können diese Signale über je einen Schmitt-Trigger S digitalisiert werden, um die Quadranteninformation zu generieren. Alternativ kann ein bereits vorhandener AD-Wandler, der eine hoch aufgelöste ST-Positionsinformation bei externer Versorgungsspannung liefert, als einfacher 2-Bit-AD-Wandler eingesetzt werden.

Um eine Energiebilanz positiv zu gestalten und den optischen ST-Sensor 100 zu befähigen, seine Funktion mit einer derartig geringen Energiemenge zu absolvieren, bedarf es Maßnahmen, die nachfolgend anhand der Fig. 14 und 17 veranschaulicht werden. Fig. 17 zeigt Signalverläufe für verschiedene Funktionskomponenten der Fig. 14.

Bezug nehmend auf Fig. 17 wird, nachdem ein Ummagnetisierungsimpuls zum Zeitpunkt t1 ausgelöst wurde, aus dem sich die Betriebsspannung Vdd ergibt, zum Zeitpunkt t2 allein die Auswerteeinheit (AL) 15 bestromt und damit aktiviert. Die Auswerteeinheit 15 aktiviert die weiteren Funktionsblöcke energiesparend, wie es nachfolgend anhand einer exemplarischen Sequenz beschrieben ist.

Zum Zeitpunkt t2, also praktisch zeitgleich bzw. unmittelbar nach dem Start der Auswerteeinheit 15, werden die Fotodiode(n) (FD) 106 und ein oder mehrere Schmitt-Trigger S aktiviert, die für die Auslesung der ST-MSB erforderlich sind. Danach wird zum Zeitpunkt t3 die Lichtquelle 102, z.B. eine LED, eingeschaltet. Zwischen den Zeiten t3 und t4 hat die Fotodiode 106 einen Wert (FD-Sig) erreicht, bei der der Schmitt-Trigger S geschaltet hat und ein digitales Signal S-Sig ausgibt, das z.B. in dem Register 110 für den weiteren Prozess vorübergehend festgehalten werden kann. Damit können zum Zeitpunkt t4 die Funktionsblöcke 106, S und insbesondere die energieintensive Lichtquelle 102 abgeschaltet werden, da deren Funktion nicht mehr benötigt wird.

Nach einer Auswertung aller Fotodiodensignale, d.h. nach dem Zeitpunkt t4, liegt also die Information vor, in welchem Quadrant der Ummagnetisierungsimpuls 52 bzw. 52' ausgelöst wurde. Somit kann auf die einzelnen Registerinhalte der digitalisierten Fotodioden-Signale verzichtet werden und auch die Register können nach dem Zeitpunkt t4 abgeschaltet werden.

Zum Zeitpunkt t5 wird der (nicht flüchtige) Speicher 74 aktiviert und die dort hinterlegten Daten (Umdrehungszählerwert und Quadrantenhistorie) ausgelesen. Diese Daten werden, wie zuvor erläutert, mit dem aktuell ermittelten Quadranten verknüpft, aktualisiert und in den Speicher 74 geschrieben. Danach kann der Speicher 74 zum Zeitpunkt t7 wieder abgeschaltet werden.

Zuvor kann der Funktionsblock für die Quadrantenermittlung zum Zeitpunkt t6 bereits desaktiviert werden.

Zum Abschluss t8 beendet auch die Auswerteeinheit 15 kontrolliert ihre Funktion, bevor zum Zeitpunkt t9 der Ummagnetisierungsimpuls abklingt.

Es sei bereits hier angemerkt, dass es bei dem hier beschriebenen Prozess teilweise auch möglich ist, einzelne Funktionen auch parallel anstatt rein sequentiell ablaufen zu lassen.

Beim Betrieb des MT-Drehgebers 10' mit einer externen Versorgungsspannung wird nicht nur die oben beschriebene Umdrehungszählung realisiert, sondern auch eine Feinposition des ST-Sensors 100 fortlaufend ausgewertet. Bei der Bildung und späteren Ausgabe der (Gesamt-)Position, die aus der Anzahl der 360°-Umdrehungen des Umdrehungszählers 76 und der fein aufgelösten Position (absoluter Drehwinkel) des ST-Sensors 100 gebildet wird, ist zu berücksichtigen, dass die Nulldurchgänge des ST und des MT nicht identisch sind. Ohne eine Synchronisation beider Informationen ist die verknüpfte Gesamtpositionsausgabe nicht stetig. Die Synchronisation der beiden Informationen lässt sich aber anhand der beim Einschalten der externen Versorgungsspannung ermittelten ST-Feinpositionen der daraus abgeleiteten aktuellen Quadranten und den zuletzt ermittelten Umdrehungszählerwerten realisieren. Die Information wird also auf Basis der Quadrantenhistorie und des Drehungszählerstands ermittelt. Einem daraus gebildeten jeweiligen Informationspaket lässt sich ein spezifischer Korrekturwert zur Ermittlung der genauen und stetigen Gesamtposition aus den ST- und MT-Rohdaten zuordnen.

Beim Betrieb des MT-Drehgebers 10' mit einer externen Versorgungsspannung kann die Anzahl der 360°-Umdrehung auch ohne den Umdrehungszähler 76 anhand der Ermittlung der durchlaufenden Nulldurchgänge des ST-Sensors 100 ermittelt werden. Dadurch entfällt auch die Synchronisation, da die Nulldurchgänge für beide Systeme (ST und MT bzw. Umdrehungszählung) in diesem Fall gleich sind. In einem hochdynamischen Betrieb des MT-Drehgebers 10' erreicht man dadurch eine bessere Echtzeitfähigkeit, da der Rechenaufwand für die Synchronisation komplett entfällt und nur einmalig, nach dem Einschalten der externen Versorgungsspannung anfällt.

Die Vorteile der hier aufgezeigten MT-Drehgeber 10 und 10' gegenüber dem Stand der Technik sind unter anderem nachfolgend aufgelistet:
- Es wird zwingend nur ein einziger Impuls(-draht-)sensor 12 bzw. 12' und nur ein einziger Erregermagnet 16 benötigt.
- Ein zusätzlicher spezifischer Hall-Schalter zur Erfassung der Polarität des externen Magnetfelds 40 ist nicht erforderlich, da die Magnetpolarität beim vorliegenden Prinzip der Erfindung keine Rolle spielt. Es werden nur die Quadranten-Informationen des ST-Sensors zur Ermittlung der Anzahl von vollständig durchlaufenden 360°-Umdrehung herangezogen.
- Der ST-Sensor 14, 14' bzw. 100 liefert als einziges Bauteil alle erforderlichen Informationen für die Umdrehungszählung und für die Erfassung der ST-Feinposition pro 360°. Auf diese Weise wird der Schaltkreis vereinfacht. Somit senken sich auch die Gesamtkosten. Es ist z.B. nicht erforderlich, die Polarität eines Ummagnetisierungsimpulses sowie die Magnetfeldpolarität zu erfassen und abzuspeichern.

- Es wird eine Quadranten-bezogene Auswertung durchgeführt, die eine hohe Montagetoleranz ermöglicht und über weitere Temperaturbereiche stabil ist.
- Die Erfindung bildet nicht nur einen Umdrehungszähler ab, sondern stellt eine günstige Lösung für ein komplettes Gebersystem dar, welches insbesondere aus einem optischen ST-Sensor, einer (Umdrehungszähl)Auswerteeinheit 15 und einer einfachen, kostengünstigen Synchronisationseinheit (z.B. in Form der Auswerteeinheit 15) steht.
- Die MT-Drehgeber 10 und 10' sind energieautark. Es wird keine Stützbatterie für eine Datensicherung benötigt, während die externe Versorgungsspannung abgeschaltet ist.
- Er werden keine verschleißbehafteten Bauteile wie z.B. Getriebe, eingesetzt.
- Es werden keine teuren Flussleitstücke benötigt.
- Zur Ermittlung der Quadranten können im einfachsten Fall die zwei MSB des ST-Datenworts herangezogen werden.

Bei der optischen Lösung wird kein magnetisch hochempfindlicher ST-Sensor (xMR-Element 14) eingesetzt, der gegen externe (fremde) Magnetfelder aufwändig abgeschirmt werden müsste.

Ein hochauflösender und hochgenauer MT-Drehgeber mit ST-Funktionalität ist auf Basis des optischen Wirkprinzips realisierbar.

Alternativ können andere Energiegeneratoren als der Impulsdrahtsensor 12 bzw. 12' eingesetzt werden. Deswegen wird generell von einem Impulssensor gesprochen. Generell sind die nachfolgenden Prinzipien für Impulssensoren bekannt.

Ein induktives mechatronisches System, das auf einer leicht magnetisierten Blattfeder basiert, die beim Vorbeibewegen eines entsprechenden Magneten ausgelenkt wird und schlagartig zurückschwingt, wenn das magnetische Haltemoment die mechanische Rückstellkraft unterschreitet (vgl. DE 102 29 978 B4). Hierdurch werden in einer Spule, die die Blattfeder umgibt, ein oder mehrere Impulse induziert.

Ein ähnliches Verfahren nutzt ein Piezoelement, welches auf einer Blattfeder sitzt, zur spontanen Energieumwandlung (vgl. DE 2004 055 625 A1).

Ein weiteres Verfahren basiert auf einem Reedschalter, der mit einer Spule umwickelt ist. Beim Vorbeibewegen eines entsprechenden Magneten schaltet der Reedschalter und ändert dabei den magnetischen Fluss so schlagartig, dass ebenfalls ein Impuls in der Spule generiert wird. Nachteilig bei diesem System ist jedoch der Verschleiß durch die mechanische Halterung sowie eine durch die Eigenmasse bedingte Schockund Vibrationsempfindlichkeit.

Anstatt eines Dipols kann auch ein Mehrpolmagnet für die Ansteuerung des Impulssensors vorgesehen werden. Damit kann das gleiche Systemprinzip angewendet werden, das danach aber nicht halbe Umdrehungen, sondern z.B. entsprechend kleinere Winkelsegmente einer 360°-Umdrehung zählt. Dies kann z.B. bei Anwendung des erfindungsgemäßen Prinzips in Zusammenhang mit einer Hohlwellenvariante interessant sein, wenn der Magnet als Dipol schlecht oder gar nicht realisiert werden kann, z.B. weil der Durchmesser hierfür zu groß ist, und auf einen mehrpoligen Magneten zurückgegriffen werden muss.

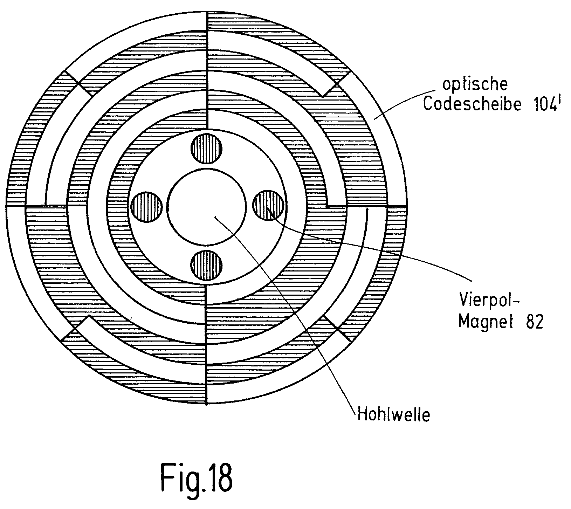

In Fig. 18 ist eine optische Codierscheibe 104' gezeigt, die mit (mehrpoligen) Zusatzmagneten 82 gemäß der oben beschriebenen Ausführungsform für eine Hohlwellenvariante eingesetzt werden kann. Exemplarisch ist die 4-Polvariante in Kombination einem optischen Co-Träger gezeigt. In diesem Fall übernimmt eine absolut codierte optische Maßverkörperung die Rolle der in den Figuren 10a, 11 a oder 12 gezeigten absoluten magnetischen Maßverkörperung.

## Patentansprüche

1. Energieautarker Multiturn-Drehgeber (10) zur Erfassung einer Anzahl von vollständigen 360°-Umdrehungen einer Geberwelle (18), die um eine Drehachse (19) rotiert und an der ein Erregermagnet (16) zur Erzeugung eines externen Magnetfelds (40) drehfest befestigt ist, sowie zur Ermittlung eines absoluten Drehwinkels, der eine fein aufgelöste Position innerhalb einer 360°-Umdrehung der Geberwelle (18) angibt, wobei der Multiturn-Drehgeber (10) zum energieautarken Erfassen der Anzahl der vollständigen 360°-Umdrehungen der Geberwelle (18) aufweist:
einen, vorzugsweise einzigen, lmpulssensor (12) zur Erzeugung von Energie aus einem Ummagnetisierungsimpuls (52), der im Impulssensor (12) durch eine ausreichend große Änderung einer Stärke des externen Magnetfelds (40) hervorgerufen wird, wobei die Magnetfeldstärkenänderung durch eine Rotation (20) des Erregermagneten (16) hervorgerufen wird;
eine Auswerteeinheit (15), die zum Bestimmen der Anzahl der vollständig durchlaufenen 360°-Umdrehungen der Geberwelle (18) ausschließlich mit Energie betrieben wird, die aus den Ummagnetisierungsimpulsen (52) gewonnen wird;
einen, vorzugsweise einzigen, Magnetfeldsensor (14) zum Erfassen der Stärke des externen Magnetfelds (40) und zum Erzeugen eines entsprechenden Signals (51), dessen Signalwert der Stärke des externen Magnetfelds (40) entspricht und an die Auswerteeinheit (15) lieferbar ist, wobei das Signal (51) einen vorzugsweise sinusförmigen Verlauf hat, wenn sich der Erregermagnet (16) kontinuierlich mit der Geberwelle (18) um die Drehachse (19) dreht, und wobei der Verlauf auswertungslogisch in eine Vielzahl von, vorzugsweise gleich großen, Quadranten (Q1 - Q4) unterteilt ist;
einen Umdrehungszähler (76) zum Speichern der Anzahl der vollständig durchlaufenen 360°-Umdrehungen der Geberwelle (18);
**gekennzeichnet durch** einen Historienspeicher (78), in welchem im Betrieb eine Historie von Quadrantenwerten (Q1 - Q4) abgespeichert wird; und
wobei die Auswerteeinheit (15) angepasst ist:
aus dem gelieferten Signalwert (Px1, Px2) einen der Quadranten (Q1-Q4) abzuleiten, in welchem der gelieferte Signalwert (Px1, Px2) liegt, und einen entsprechenden Quadrantenwert an den Historienspeicher (78) zu liefern, während einer der Ummagnetisierungsimpulse (52) auftritt.

2. Multiturn-Drehgeber (10) nach Anspruch 1, wobei der Impulssensor ein Wiegand-Sensor ist.

3. Multiturn-Drehgeber (10) nach einem der Ansprüche 1 oder 2, wobei der Magnetfeldsensor (14) hochohmig ist und ein xMR-Elemerit ist, insbesondere ein TMR-, AMR- oder GMR-Element.

4. Multiturn-Drehgeber (10) nach einem der Ansprüche 1 bis 3, der ferner einen Gleichrichter (64) aufweist.

5. Multiturn-Drehgeber (10) nach einem der Ansprüche 1 bis 4, wobei der Erregermagnet (16) ein Permanentmagnet, insbesondere ein Dipol, ist, der vorzugsweise zentrisch an der Geberwelle (18) befestigt ist.

6. Multiturn-Drehgeber (10) nach einem der Ansprüche 1 bis 5, wobei der Impulssensor (12) und der Magnetfeldsensor (14) koaxial zur Geberwelle (18) und zum Erregermagneten (16) angeordnet sind, dass der Impulssensor (12) und der Magnetfeldsensor (14) dem Erregermagneten (16) axialer Richtung beabstandet gegenüberliegen, wenn die Geberwelle (18) mit dem Multiturn-Drehgeber (10) zusammengebaut ist.

7. Multiturn-Drehgeber (10) nach einem der Ansprüche 1 bis 6, wobei n Ummagnetisierungsimpulse (52) für jede der 360°-Umdrehungen der Geberwelle (18) erzeugt werden und wobei jeder n-te Ummagnetisierungsimpuls (52) eines Impulszyklus eine Aktualisierung eines Werts des Umdrehungszählerspeichers (76) verursacht.

8. Multiturn-Drehgeber (10) nach einem der Ansprüche 1 bis 7, wobei eine Orientierung des Magnetfeldsensors (14) relativ zum Impulsdraht so gewählt ist, dass die Ummagnetisierungsimpulse (52) jeweils im Wesentlichen mittig in den entsprechenden Quadranten (Q1-Q4) liegen.

9. Multiturn-Drehgeber (10) nach einem der Ansprüche 1 bis 8, der ferner einen Energiespeicher (66) aufweist, der mit dem Impulssensor (12) elektrisch verbunden ist und der nur mit Energie geladen wird, die aus den Ummagnetisierungsimpulsen (52) gewonnen wird.

10. Verfahren zur Ermittlung einer eindeutigen Position einer Geberwelle (18), die um eine Drehachse (19) rotiert, mittels eines energieautarken Multiturn-Drehgebers (10), der zur Erfassung einer Anzahl von vollständig durchlaufenen 360°-Umdrehungen der rotierenden Geberwelle (18) sowie zur Erfassung eines absoluten Drehwinkels eingerichtet ist, der eine fein aufgelöste Position (P) innerhalb einer 360°-Umdrehung der Geberwelle (18) angibt, an der ein Erregermagnet (16) zur Erzeugung eines externen Magnetfelds (40) drehfest befestigt ist, welches zumindest für eine Ermittlung der fein aufgelösten Position benutzt wird, wobei der Multiturn-Drehgeber (10) einen Impulssensor (12), einen Energiespeicher (66), ein Magnetfeldsensor (14), einen Umdrehungszähler (76) und eine Auswerteeinheit (15) aufweist, wobei der Magnetfeldsensor (14) ein Signal (51) mit einem vorzugsweise sinusförmigen Verlauf liefert, wenn sich der Erregermagnet (16) kontinuierlich mit der Geberwelle (18) um die Drehachse (19) dreht und wobei der Verlauf auswertungslogisch in eine Vielzahl von, vorzugsweise gleich großen, Quadranten (Q1-Q4) unterteilt ist, **gekennzeichnet durch** einen Historienspeicher (78), wobei das Verfahren die folgenden Schritte aufweist:
Abspeichern einer Historie von Quadrantenwerten (Q2, Q4) im Historienspeicher, wobei jeder Quadrantenwert (Q2, Q4) einem Ummagnetisierungsimpuls (52), der im Impulssensor (12) **durch** eine spezifische Änderung des externen Magnetfelds (40) aufgrund einer Rotation der Geberwelle (18) auslöst wird, entspricht und wobei jeder Quadrantenwert von der Auswerteeinheit (15) unter Berücksichtigung eines Signalwerts (Px1, Px2), der vom Magnetfeldsensor (14) aufgrund des Ummagnetisierungsimpulses (52) an die Auswerteeinheit (15) geliefert wird, bestimmt wird und an den Historienspeicher (78) geliefert wird, wobei n Ummagnetisierungsimpulse (52) für jede der 360°-Umdrehungen der Geberwelle (18) erzeugt werden und wobei jeder n-te Ummagnetisierungsimpuls (52) eine Aktualisierung des Umdrehungszählers in Form einer drehsinnabhängigen Inkrementierung oder Dekrementierung eines Werts des Umdrehungszählers **durch** die Auswerteeinheit (15) verursacht; und
während einer Zeitdauer, die einen diskreten Zeitpunkt umfasst, für welchen die eindeutige Position (Px1, Px2) der Geberwelle (18) zu ermitteln ist, Durchführen der folgenden Schritte:
Versorgen der Auswerteeinheit (15) und des Magnetfeldsensors (14) mit einer externen Energie;
Erfassen einer Stärke des externen Magnetfelds (40) zu dem diskreten Zeitpunkt mittels des Magnetfeldsensors (14) und Liefern des entsprechenden Signalwerts (Px1, Px2) an die Auswerteeinheit (15);
Bestimmen mittels der Auswerteeinheit (15), in welchem der Quadranten (Q3, Q4) der gelieferte Signalwert (Px1, Px2) liegt;
Abfragen des letzten Quadrantenwerts (Q2), der in dem Historienspeicher zuletzt in der Historie abgespeichert wurde, **durch** die Auswerteeinheit (15);
Überprüfen **durch** die Auswerteeinheit (15), ob der gelieferte Signalwert (Px1 , Px2) innerhalb einer verbotenen Quadrantenzone (Z1, Z2) liegt, die dem zuletzt abgespeicherten Quadrantenwert (Q2) zugeordnet ist, wobei für jeden Quadrantenwert (Q2, Q4) eine spezifische verbotene Quadrantenzone (Z1, Z2, Z3, Z4) vorab bestimmt und hinterlegt ist;
wenn der gelieferte Signalwert (Px1, Px2) außerhalb der verbotenen Quadrantenzone (Z1, Z2) liegt, Bestimmen der eindeutigen Position **durch** Summieren des absoluten Drehwinkels, der dem gelieferten Signalwert (Px1 , Px2) entspricht, mit einem aktuellen Umdrehungszählerwert; oder
anderenfalls, wenn der gelieferte Signalwert (Px1, Px2) innerhalb der verbotenen Quadrantenzone (Z1, Z2) liegt, Auswerten eines Zusatzsignals, welches zusätzlich **durch** den Impulssensor (12) erzeugt wird, Korrigieren des Umdrehungszählerwerts mittels der Auswerteinheit (15) auf Basis des Zusatzsignals und Bestimmen des absoluten Drehwinkels auf Basis des Zusatzsignals, bevor die eindeutige Position aus dem absoluten Drehwinkel und dem korrigierten Umdrehungszählerwert bestimmt wird.

11. Verfahren nach Anspruch 10, wobei die spezifischen verbotenen Quadrantenzonen (Z1, Z2) in einem Speicher der Auswerteeinheit (15) oder in einem separaten Speicherelement (74) hinterlegt sind.

12. Verfahren nach einem der Ansprüche 10 oder 11, wobei der Impulssensor (12) einen, vorzugsweise einzigen, Impulsdraht (36) und eine, vorzugsweise einzige, Spule (38) aufweist, die den Impulsdraht (36) umgibt, wobei der Impulsdraht (36) einen äußeren Mantel (46) und einen innerhalb des Mantels (46) angeordneten Kern (48) aufweist.

13. Verfahren nach Anspruch 12, wobei äußere Grenzen der verbotenen Quadrantenzonen (Z1, Z2) durch Ummagnetisierungs-Zündschwellen (54) des Kerns (48) definiert sind.

14. Verfahren nach einem der Ansprüche 10 bis 13, wobei der Impulssensor (12) einen, vorzugsweise einzigen, Impulsdraht (36) und eine, vorzugsweise einzige, Spule (38) aufweist, die den Impulsdraht (36) umgibt, und wobei der Schritt des Auswertens des Zusatzsignals und des Korrigierens des Umdrehungszählerwerts aufweist:
Bestromen der Spule (38) für eine kurze Zeitdauer, so dass dem externen Magnetfeld (40) des Erregermagneten (16) ein zusätzliches Magnetfeld überlagert wird und dadurch ein Test-Ummagnetisierungsimpuls im Impulsdraht (36) erzeugbar ist, der anschließend mit der Spule (38) messbar ist, wobei eine Existenz oder Nichtexistenz des Test-Ummagnetisierungsimpulses als das Zusatzsignal von der Spule (38) an die Auswerteeinheit (15) geliefert wird;
Überprüfen durch die Auswerteeinheit (15), ob das Zusatzsignal den Test-Ummagnetisierungsimpuls enthält oder nicht; und
Korrigieren des Werts des Umdrehungszählers (76), wenn das Zusatzsignal den Test-Ummagnetisierungsimpuls enthält; oder Beibehalten des aktuellen Umdrehungszählerwerts, wenn das Zusatzsignal den Test-Ummagnetisierungsimpuls nicht enthält.

15. Verfahren nach Anspruch 14, wobei der Schritt des Korrigierens des Werts des Umdrehungszählers (76) ein drehsinnabhängiges Inkrementieren oder Dekrementieren des Werts des aktuellen Umdrehungszählers (76) aufweist.

16. Verfahren nach einem der Ansprüche 10 bis 15, wobei der Impulssensor (12) einen ersten Impulsdraht (36-1), mindestens einen zweiten Impulsdraht (36-2), einen Wickelkörper (80), in welchem die Impulsdrähte (36-1, 36-2) angeordnet sind, sowie eine, vorzugsweise einzige, Spule (38) aufweist, die wiederum den Wickelkörper (80) umgibt, wobei jeder der Impulsdrähte (36-1, 36-2) einen äußeren Mantel (46) und einen innerhalb des Mantels (46) angeordneten Kern (48) aufweist und wobei die Impulsdrähte (36) in einer jeweiligen vorgegebenen Position im Wickelkörper (80) fixiert sind.

17. Verfahren nach einem der Ansprüche 10 bis 16, wobei äußere Grenzen der jeweiligen verbotenen Quadrantenzone (Z1, Z2, Z1', Z2') durch Ummagnetisierungs-Zündschwellen (54) der Kerne (48) definiert sind.

18. Verfahren nach Anspruch 16, wobei die Ummagnetisierungspulse (52, 52') des zweiten Impulsdrahtes (36-2) als Zusatzsignal verwendet werden.

19. Verfahren nach Anspruch 16, wobei die Impulsdrähte (36-1, 36-2) in axialer Richtung der Geberwelle (18) zueinander beabstandet sind, und vorzugsweise achsparallel zueinander angeordnet sind.

20. Verfahren nach Anspruch 16, wobei die Impulsdrähte (36-1, 36-2) in einer einzigen Ebene angeordnet sind, die im Wesentlichen senkrecht zur Drehachse (19) der Geberwelle (18) orientiert ist, und wobei der erste Impulsdraht- (36-1) einen Winkel mit jedem der zweiten Impulsdrähte (36-2) einschließt.

21. Verfahren nach Anspruch 16, wobei der Impulssensor (12) koaxial zum Erregermagneten (16) angeordnet ist, wobei die Impulsdrähte (36-1, 36-2) in zumindest einer Ebene angeordnet sind, die jeweils im Wesentlichen senkrecht zur Drehachse (19) der Geberwelle (18) und im Wesentlichen parallel zur Rotationsebene (34) des Erregermagneten (16) orientiert ist.

22. Verfahren nach einem der Ansprüche 10 bis 21, wobei der Erregermagnet (16) ein einziger Dipolmagnet ist, der in einer Ebene (34) angeordnet ist, die im Wesentlichen senkrecht zur Drehachse (19) orientiert ist.

23. Verfahren nach einem der Ansprüche 10 bis 22, wobei der Impulssensor (12) exzentrisch zur Drehachse (19) der Geberwelle (18) angeordnet ist, wobei neben dem koaxial angeordneten Erregermagneten (16) mindestens vier Zusatzmagneten vorgesehen sind, die in Umfangsrichtung mit wechselnd orientierten Magnetfeldern gleichmäßig verteilt an der Geberwelle (18) befestigbar sind, so dass in jedem Quadrant (Q1-Q4) mindestens ein Ummagnetisierungsimpuls (52, 52') erzeugt wird, wobei solche Ummagnetisierungsimpulse, die von den üblichen Ummagnetisierungsimpulsen abweichen, das Zusatzsignal liefern.

24. Verfahren nach Anspruch 23, wobei die Anzahl der Zusatzmagnete durch 2ⁿ definiert ist, wobei n eine ganzzahlige Zahl ist, die größer als 2 ist.

25. Energieautarker Multiturn-Drehgeber (10') zur Erfassung einer Anzahl von vollständigen 360°-Umdrehungen einer Geberwelle (18), die um eine Drehachse (19) rotiert und an der ein Erregermagnet (16) zur Erzeugung eines externen Magnetfelds (40) drehfest befestigt ist, und an der eine optische Codierscheibe (104) zur Ermittlung eines absoluten Drehwinkels befestigt ist, der eine fein aufgelöste Position innerhalb einer 360°-Umdrehung der Geberwelle (18) angibt, wobei der Multiturn-Drehgeber (10) zum energieautarken Erfassen der Anzahl der vollständigen 360°-Umdrehungen der Geberwelle (18) aufweist:
einen, vorzugsweise einzigen, Impulssensor (12) zur Erzeugung von Energie aus einem Ummagnetisierungsimpuls (52), der im Impulssensor (12) durch eine ausreichend große Änderung einer Stärke des externen Magnetfelds (40) hervorgerufen wird, wobei die Magnetfeldstärkenänderung durch eine Rotation (20) des Erregermagneten (16) hervorgerufen wird;
eine Auswerteeinheit (15), die zum Bestimmen der Anzahl der vollständig durchlaufenen 360°-Umdrehungen der Geberwelle (18) ausschließlich mit Energie betrieben wird, die aus den Ummagnetisierungsimpulsen (52) gewonnen wird;
einen, vorzugsweise einzigen, optischen Sensor (14'; 100) zum Erfassen einer aktuellen Position der Geberwelle (18) und zum Erzeugen eines entsprechenden Signals, dessen Signalwert der aktuellen Position der Geberwelle (18) entspricht und an die Auswerteeinheit (15) lieferbar ist, wobei das Signal (51) einen, vorzugsweise sinusförmigen, Verlauf hat, wenn sich der Erregermagnet (16) kontinuierlich mit der Geberwelle (18) um die Drehachse (19) dreht, und wobei der Verlauf auswertungslogisch in eine Vielzahl von, vorzugsweise gleich großen, Quadranten (Q1 - Q4) unterteilt ist;
einen Umdrehungszähler (76) zum Speichern der Anzahl der vollständig durchlaufenen 360°-Umdrehungen der Geberwette (18);
**gekennzeichnet durch** einen Historienspeicher (78), in welchem im Betrieb eine Historie von Quadrantenwerten (Q1 - Q4) gespeichert wird
wobei die Auswerteeinheit (15) angepasst ist, aus dem gelieferten Signalwert (Px1, Px2) einen der Quadranten (Q1-Q4) abzuleiten, in welchem der gelieferte Signalwert (Px1, Px2) liegt, und einen entsprechenden Quadrantenwert an den Historienspeicher (78) zu liefern, während einer der Ummagnetisierungsimpulse (52) auftritt.

26. Multiturn-Drehgeber (10') nach Anspruch 25, wobei der optische Sensor (100) eine LED und einen Schmitt-Trigger aufweist.

27. Multiturn-Drehgeber (10') nach einem der Ansprüche 25 oder 26, wobei der Impulssensor ein Impulsdrahtsensor (12) ist, der mindestens einen Impulsdraht (36) und eine Spule (38) aufweist, die den mindestens einen Draht (36) umgibt.

28. Multiturn-Drehgeber (10') nach einem der Ansprüche 25 bis 27, der ferner eine absolut kodierte Kodierscheibe (104; 104') aufweist, die an der Drehgeberwelle (18) drehfest befestigbar ist.

29. Multiturn-Drehgeber (10') nach einem der Ansprüche 25 bis 28, der ferner ein Register (110) zum Speichern eines Ausgabesignals (S-Sig) des optischen Sensors (14'; 100) aufweist.

30. Verfahren zur Ermittlung einer eindeutigen Position einer Geberwelle (18), die um eine Drehachse (19) rotiert, mittels eines energieautarken Multiturn-Drehgebers (10), der vorzugsweise nach einem der Ansprüche 25 bis 29 ausgebildet ist und der zur optischen Erfassung einer Anzahl von vollständig durchlaufenen 360°-Umdrehungen der rotierenden Geberwelle (18) sowie zur optischen Erfassung eines absoluten Drehwinkels eingerichtet ist, der eine fein aufgelöste Position (P) innerhalb einer 360°-Umdrehung der Geberwelle (18) angibt, an der ein Erregermagnet (16) zur Erzeugung eines externen Magnetfelds (40) drehfest befestigt ist, welches benutzt wird, um eine Energie zu Erzeugen, die zur Umdrehungszählung benötigt wird, wobei der Multiturn-Drehgeber (10') einen Impulssensor (12), einen optischen Sensor (14'; 100), einen Umdrehungszähler (76) und eine Auswerteeinheit (15) aufweist, wobei der optische Sensor (14'; 100) ein Signal (51) mit einem, vorzugsweise sinusförmigen, Verlauf liefert, wenn sich die Geberwelle (18) kontinuierlich um die Drehachse (19) dreht und wobei der Verlauf auswertungslogisch in eine Vielzahl von, vorzugsweise gleich großen, Quadranten (Q1-Q4) unterteilt ist, **gekennzeichnet durch** einen Historienspeicher (78), wobei das Verfahren die folgenden Schritte aufweist:
Bereitstellen einer Auswertungsenergie zu einem Zeitpunkt t1, wenn ein Ummagnetisierungsimpuls (52) im Impulssensor erzeugt wird;
Aktivieren der Auswerteeinheit (15) und des optischen Sensors (100) zu einem Zeitpunkt t2, unmittelbar nachdem die Auswerteenergie bereitsteht;
danach Erfassen eines optischen Werts, der **durch** ein Beleuchten der Kodierscheibe (104) erzeugt ist, und Ausgeben eines entsprechenden Signals (S-Sig);
Ermitteln und Ausgeben eines aktuellen Quadranten, der dem ausgegebenen Signal (S-Sig) entspricht, in welchem der Ummagnetisierungsimpuls (52) stattgefunden hat, **durch** die Auswerteeinheit (15);
Aktivieren des Speicherelements (74) und Aktualisieren einer Quadrantenhistorie, die zuletzt abgespeicherte Quadrantenwerte aufweist; und
Desaktivieren der Auswerteeinheit (15), nachdem alle zuvor erwähnten Schritte durchgeführt sind und bevor der Ummagnetisierungsimpuls (52) abklingt.

31. Verfahren nach Anspruch 30, das ferner aufweist:
Ausschalten des optischen Sensors (100), nachdem das entsprechende Signal (S-Sig) erzeugt und ausgegeben ist.

32. Verfahren nach Anspruch 30 oder 31, das ferner aufweist:
Einschalten einer Lichtquelle (102), nachdem die Auswerteeinheit (15) und der optische Sensor (100) aktiviert sind und Ausschalten der Lichtquelle (102), wenn das entsprechende Signal (S-Sig) ermittelt wurde.

33. Verfahren nach einem der Ansprüche 30 bis 32, wobei der optische Sensor (100) eine Fotodiode (106) und einen Schmitt-Trigger (S) aufweist.

## Claims

1. An energy-self-sufficient multiturn rotary encoder (10) for detecting a number of complete 360° revolutions of an encoder shaft (18), rotating about a rotational axis (19) and to which an excitation magnet (16) is mounted in a rotationally fixed manner for generating an external magnetic field (40), as well as for determining an absolute rotational angle indicating a fine-resolved position within one 360° revolution of the encoder shaft (18), wherein the multiturn rotary encoder (10) for energy-self sufficiently detecting the number of the complete 360° revolutions of the encoder shaft (18) comprises:
a, preferably one single, pulse sensor (12) for generating energy from a remagnetization pulse (52), which is caused in the pulse sensor (12) by a sufficiently large change of strength of the external magnetic field (40), wherein the change of the magnetic-field strength is caused by rotation (20) of the excitation magnet (16);
an evaluation unit (15) which is only operated, in order to determine the number of the completely passed 360° revolutions of the encoder shaft (18), by energy obtained from the remagnetization pulses (52);
a, preferably single one, magnetic-field sensor (14) for detecting the strength of the external magnetic field (40) and for generating a corresponding signal (51), the signal value of which corresponds to the strength of the external magnetic field (40) and which can be delivered to the evaluation unit (15), wherein the signal (51) ideally has a sinusoidal shape if the excitation magnet (16) rotates continuously about the rotational axis (19) together with the encoder shaft (18), and wherein the shape is sectionalized, in terms of an evaluation logic, into a plurality of quadrants (Q1 - Q4), which are preferably sized equally;
a revolution counter (76) for storing the number of completely passed 360° revolutions of the encoder shaft (18);
**characterized by** a history memory (78) in which, in operation, a history of quadrant values (Q1 - Q4) is stored; and
wherein the evaluation unit (15) is adapted to:
derive one of the quadrants (Q1-Q4) from the delivered signal value (Px1, Px2), in which the delivered signal value (Px1, Px2) is located, and to deliver a corresponding quadrant value to the history memory (78) while one of the remagnetization pulses (52) occurs.

2. The multiturn rotary encoder (10) of claim 1, wherein the pulse sensor is a Wiegand sensor.

3. The multiturn rotary encoder (10) of one of claims 1 or 2, wherein magnetic-field sensor (14) is high resistive and is an xMR element, particularly a TMR element, an AMR element, or a GMR element.

4. The multiturn rotary encoder (10) of one of claims 1 to 3 further comprising a rectifier (64).

5. The multiturn rotary encoder (10) of one of claims 1 to 4, wherein the excitation magnet (16) is a permanent magnet, in particular a dipole, which is preferably mounted centrically to the encoder shaft (18).

6. The multiturn rotary encoder (10) of one of claims 1 to 5, wherein the pulse sensor (12) and the magnetic-field sensor (14) are arranged coaxially relative to the encoder shaft (18) and to the excitation magnet (16) such that the pulse sensor (12) and the magnetic-field sensor (14) are oppositely arranged in an axial direction relative to the excitation magnet (16), when the encoder shaft (18) is assembled with the multiturn rotary encoder (10).

7. The multiturn rotary encoder (10) of one of claims 1 to 6, wherein n remagnetization pulses (52) are generated for each of the 360° revolutions of the encoder shaft (18), and wherein each n-th remagnetization pulse (52) of a pulse cycle causes an update of a value of the revolution-counter memory (76).

8. The multiturn rotary encoder (10) of one of claims 1 to 7, wherein an orientation of the magnetic-field sensor (14) relative to the pulse wire is selected such that the remagnetization pulses (52) respectively are substantially located centrally within the corresponding quadrants (Q1-Q4).

9. The multiturn rotary encoder (10) of one of claims 1 to 8, which further comprises an energy-storage device (66) which is connected electrically to the pulse sensor (12) and is only charged by energy obtained from the remagnetization pulses (52).

10. A method for determining an unambiguous position of an encoder shaft (18), which rotates about a rotational axis (19), by means of an energy-self-sufficient multiturn rotary encoder (10) which is configured to detect a number of completely passed 360° revolutions of the rotating encoder shaft (18) as well as for detecting an absolute rotational angle indicating a fine-resolved position (P) within one 360° revolution of the encoder shaft (18), to which an excitation magnet (16) is mounted in a rotationally fixed manner for generating an external magnetic field (40), which is at least used for determination of the fine-resolved position, wherein the multiturn rotary encoder (10) comprises a pulse sensor (12), an energy-storage device (66), a magnetic-field sensor (14), a revolution counter (76), and an evaluation unit (15), wherein the magnetic-field sensor (14) delivers a signal (51), which preferably has a sinusoidal shape, if the excitation magnet (16) rotates continuously together with the encoder shaft (18) about the rotational axis (19), and wherein the shape is sectionalized, in terms of an evaluation logic, into a plurality of quadrants (Q1-Q4), which are preferably sized equally, **characterized by** a history memory (78) wherein the method comprises the following steps:
storing a history of quadrant values (Q2, Q4) in the history memory, wherein each of the quadrant values (Q2, Q4) corresponds to a remagnetization pulse (52) triggered in the pulse sensor (12) by a specific change of the external magnetic field (40) due to rotation of the encoder shaft (18), and wherein each of the quadrant values is determined by the evaluation unit (15), which considers a signal value (Px1, Px2) delivered by the magnetic-field sensor (14) due to the remagnetization pulse (52) to the evaluation unit (15), and which is delivered to the history memory (78), wherein n remagnetization pulses (52) are generated for each of the 360° revolutions of the encoder shaft (18), and wherein each n-th remagnetization pulse (52) causes an update of the revolution counter in terms of a sense-of-rotation-dependent incrementing or decrementing of a value of the revolution counter by the evaluation unit (15); and
during a time period, which comprises a discrete point in time, for which the unambiguous position (Px1, Px2) of the encoder shaft (18) is to be determined, carrying out the following steps:
supplying the evaluation unit (15) and the magnetic-field sensor (14) with external energy;
detecting a strength of the external magnetic field (40) at the discrete point in time by means of the magnetic-field sensor (14) and delivering the corresponding signal value (Px1, Px2) to the evaluation unit (15);
determining by means of the evaluation unit (15) in which of the quadrants (Q3, Q4) the delivered signal value (Px1, Px2) is located;
inquiring the last quadrant value (Q2), which has been stored last in the history memory, by means of the evaluation unit (15);
checking, by means of the evaluation unit (15), whether the delivered signal value (Px1, Px2) is located within a forbidden quadrant zone (Z1, Z2), which is assigned to the quadrant value (Q2) stored last, wherein a specifically forbidden quadrant zone (Z1, Z2, Z3, Z4) is determined and recorded in advance for each of the quadrant values (Q2, Q4);
if the delivered signal value (Px1, Px2) is located outside of the forbidden quadrant zone (Z1, Z2) determining the unambiguous position by summing the absolute rotational angle, which corresponds to the delivered signal value (Px1, Px2), and the current revolution-counter value; or
otherwise, if the delivered signal value (Px1, Px2) is located within the forbidden quadrant zone (Z1, Z2), evaluating an additional signal, which is generated additionally by the pulse sensor (12), correcting the revolution-counter value by means of the evaluation unit (15) on the basis of the additional signal, and determining the absolute rotational angle on the basis of the additional signal before the unambiguous position is determined from the absolute rotational angle and the corrected revolution-counter value.

11. The method of claim 10, wherein the specifically forbidden quadrant zones (Z1, Z2) are recorded in a memory device of the evaluation unit (15), or in a separate storage element (74).

12. The method of one of claims 10 or 11, wherein the pulse sensor (12) comprises a, preferably one single, pulse wire (36) and a, preferably one single, coil (38) surrounding the pulse wire (36), wherein the pulse wire (36) comprises an outer jacket (46) and a core (48) arranged within the jacket (46)

13. The method of claim 12, wherein outer boundaries of the forbidden quadrant zones (Z1, Z2) are defined by remagnetization-ignition thresholds (54) of the core (48).

14. A method of one of claims 10 to 13, wherein the pulse sensor (12) comprises a, preferably one single, pulse wire (36) and a, preferably one single, coil (38), surrounding the pulse wire (36), and wherein the step of evaluating the additional signal and correcting the revolution-counter values comprises:
applying current to the coil (38) for a short period of time so that the external magnetic field (40) of the excitation magnet (16) is superimposed by an additional magnetic field and thereby a test-remagnetization pulse can be generated in the pulse wire (36) which can be measured subsequently by means of the coil (38), wherein an existence or non-existence of the test-remagnetization pulse is delivered as the additional signal from the coil (38) to the evaluation unit (15);
checking by means of the evaluation unit (15) whether or not the additional signal contains the test-remagnetization pulse; and
correcting the value of the revolution counter (76) if the additional signal contains the test-remagnetization pulse, or maintaining the current revolution-counter value if the additional signal does not contain the test-remagnetization pulse.

15. The method of claim 14, wherein the step of correcting the value of the revolution counter (76) comprises a sense-of-rotation-dependent incrementing or decrementing of the value of the current revolution counter (76).

16. The method of one of claims 10 to 15, wherein the pulse sensor (12) comprises a first pulse wire (36-1), at least one second pulse wire (36-2), a former (80) within which the pulse wires (36-1, 36-2) are arranged, as well as a, preferably one single, coil (38) which in turn surrounds the former (80), wherein each of the pulse wires (36-1, 36-2) comprises an outer jacket (46) and a core (48), which is arranged within the jacket (46), and wherein the pulse wires (36) are fixed within the former (80) in a respective default position.

17. The method of one of claims 10 to 16, wherein outer boundaries of the respectively forbidden quadrant zone (Z1, Z2, Z1', Z2') are defined by remagnetization-ignition thresholds (54) of the cores (48).

18. The method of claim 16, wherein the remagnetization pulses (52, 52') of the second pulse wire (36-2) are used as an additional signal.

19. The method of claim 16, wherein the pulse wires (36-1, 36-2) are spaced to each other in an axial direction of the encoder shaft (18), and preferably are arranged axially parallel to each other.

20. The method of claim 16, wherein the pulse wires (36-1, 36-2) are arranged in one single plane oriented substantially perpendicular to the rotational axis (19) of the encoder shaft (18), and wherein the first pulse wire (36-1) encloses an angle which each of the second pulse wires (36-2).

21. The method of claim 16, wherein the pulse sensor (12) is arranged coaxially to the excitation magnet (16), wherein the pulse wires (36-1, 36-2) are arranged at least in a plane respectively orientated substantially perpendicular to the rotational axis (19) of the encoder shaft (18) and substantially parallel to the rotational plane (34) of the excitation magnet (16).

22. The method of one of claims 10 to 21, wherein the excitation magnet (16) is one single dipole magnet arranged in a plane (34) which is substantially orientated perpendicular to the rotational axis (19).

23. The method of one of claims 10 to 22, wherein the pulse sensor (12) is arranged eccentrically to the rotational axis (19) of the encoder shaft (18), wherein beside the coaxially arranged excitation magnet (16) at least four additional magnets are provided which can be mounted to the encoder shaft (18) in a circumferential direction providing alternating orientated magnet fields being distributed regularly so that in each of the quadrants (Q1-Q4) at least one remagnetization pulse (52, 52') is generated, wherein the remagnetization pulses, which are deviating from the typical remagnetization pulses, deliver the additional signal.

24. The method of claim 23, wherein the number of additional magnets is defined by 2ⁿ, wherein n is an integer greater than 2.

25. An energy-self-sufficient multiturn rotary encoder (10') for detecting a number of complete 360° revolutions of an encoder shaft (18), which rotates about a rotational axis (19) and to which an excitation magnet (16) is mounted in a rotationally fixed manner for generating an external magnetic field (40) and to which an optical encoding disc (104) is mounted for determining an absolute rotational angle indicating a fine-resolved position within one 360° revolution of the encoder shaft (18), wherein the multiturn rotary encoder (10) which is configured to detect in an energy-self-sufficient manner the number of the complete 360° revolutions of the encoder shaft (18) comprises:
a, preferably one single, pulse sensor (12) for generating energy from a remagnetization pulse (52) which is caused in the pulse sensor (12) by a sufficiently large change in strength of the external magnetic field (40), wherein the magnetic-field strength change is caused by rotation (20) of the excitation magnet (16);
an evaluation unit (15) which is operated only with energy obtained from the remagnetization pulses (52) for determining the number of the completely passed 360° revolutions of the encoder shaft (18);
a, preferably one single, optical sensor (14'; 100) for detecting a current position of the encoder shaft (18) and for generating a corresponding signal, the signal value of which corresponds to the current position of the encoder shaft (18) and which is deliverable to the evaluation unit (15), wherein the signal (51) has a shape, which is preferably sinusoidal, if the excitation magnet (16) rotates continuously together with the encoder shaft (18) about the rotational axis (19), and wherein the shape, in terms of evaluation logic, is sectionalized into a plurality of quadrants (Q1 - Q4), which are preferably sized equally;
a revolution counter (76) for storing the number of the completely passed 360° revolutions of the encoder shaft (18);
**characterized by** a history memory (78) in which, in operation, a history of quadrant values (Q1 - Q4) is stored; and
wherein the evaluation unit (15) is adapted to derive one of the quadrants (Q1-Q4) from the delivered signal value (Px1, Px2), wherein the delivered signal value (Px1, Px2) is located in the one of the quadrants, and to deliver a corresponding quadrant value to the history memory (78) while the remagnetization pulse (52) occurs.

26. The multiturn rotary encoder (10') of claim 25, wherein the optical sensor (100) comprises an LED and a Schmitt trigger.

27. The multiturn rotary encoder (10') of one of claims 25 or 26, wherein the pulse sensor is a pulse wire sensor (12) having at least one pulse wire (36) and one coil (38) surrounding the at least one wire (36).

28. The multiturn rotary encoder (10') of one of claims 25 to 27 further comprising an absolutely encoded encoding disc (104; 104') which can be mounted in a rotationally fixed manner to the rotary-encoder shaft (18).

29. The multiturn rotary encoder (10') of one of claims 25 to 28 further comprising a register (110) for storing an output signal (S-Sig) of the optical sensor (14'; 100).

30. A method for determining an unambiguous position of an encoder shaft (18), which rotates rotating about a rotational axis (19), by means of an energy-self-sufficient multiturn rotary encoder (10), which is preferably formed in accordance with one of claims 25 to 29 and which is adapted to optically detect a number of completely passed 360° revolutions of the rotating encoder shaft (18), as well as for optically detecting an absolute rotational angle indicating a fine-resolved position (P) within one 360° revolution of the encoder shaft (18) to which an excitation magnet (16) for generating an external magnetic field (40) is mounted in a rotationally fixed manner, wherein the external magnetic field (40) is used for generating an energy required for counting revolutions, wherein the multiturn rotary encoder (10') comprises a pulse sensor (12), an optical sensor (14'; 100), a revolution counter (76), and an evaluation unit (15), wherein the optical sensor (14'; 100) delivers a signal (51) having a, preferably sinusoidal, shape if the encoder shaft (18) rotates continuously about the rotational axis (19) and wherein the shape, in terms of an evaluation logic, is sectionalized into a plurality of quadrants (Q1-Q4), which are preferably sized equally, **characterized by** a history memory (78), wherein the method comprises the following steps:
providing an evaluation energy at a point in time t1 if a remagnetization pulse (52) is generated in the pulse sensor;
activating the evaluation unit (15) and the optical sensor (100) at a point in time t2 immediately after the evaluation energy is provided;
then detecting an optical value, generated by illuminating the encoding disc (104), and outputting a corresponding signal (S-Sig);
determining and outputting a current quadrant corresponding to the output signal (S-Sig), in which quadrant the remagnetization pulse (52) has occurred, by means of the evaluation unit (15);
activating the storage element (74) and updating a quadrant history comprising the quadrant values stored last; and
deactivating the evaluation unit (15) after each of the above-mentioned steps is carried out and before the remagnetization pulse (52) decays.

31. The method of claim 30, further comprising:
turning off the optical sensor (100) after the corresponding signal (S-Sig) is generated and output.

32. The method of claim 30 or 31, further comprising:
turning on a light source (102) after the evaluation unit (15) and the optical sensor (100) are activated, and turning off the light source (102) when the corresponding signal (S-Sig) has been determined.

33. The method of one of claims 30 to 32, wherein the optical sensor (100) comprises a photodiode (106) and a Schmitt trigger (S).

## Revendications

1. Capteur de rotation (10) multi-tours autonome en énergie destiné à détecter un nombre de tours complets à 360° d'un arbre capteur (18) qui tourne autour d'un axe de rotation (19) et sur lequel est fixé de manière solidaire en rotation un aimant excitateur (16) pour la génération d'un champ magnétique (40) externe ainsi qu'à déterminer un angle de rotation absolu qui indique une position à résolution fine à l'intérieur d'un tour à 360 ° de l'arbre capteur (18), le capteur de rotation (10) multi-tours comportant, pour la détection autonome en énergie du nombre de tours complets à 360 ° de l'arbre capteur (18);
un capteur d'impulsions (12), de préférence unique, destiné à générer de l'énergie à partir d'une impulsion (52) d'inversion magnétique qui est provoquée dans le capteur d'impulsion (12) par une modification suffisamment importante d'une intensité du champ magnétique (40) externe, la modification de l'intensité du champ magnétique étant provoquée par une rotation (20) de l'aimant excitateur (16) ;
une unité d'évaluation (15) qui pour déterminer le nombre des tours à 360 ° entièrement passés de l'arbre capteur (18) fonctionne uniquement avec de l'énergie qui est récupérée à partir des impulsions (52) d'inversion magnétique ;
un capteur de champ magnétique (14) de préférence unique, destiné à détecter l'intensité du champ magnétique (40) extérieur et à générer un signal (51) correspondant dont la valeur de signal correspond à l'intensité du champ magnétique (40) externe peut être fournie à l'unité d'évaluation (15), le signal (51) ayant une courbe de préférence sinusoïdale lorsque l'aimant excitateur (16) tourne en continu avec l'arbre capteur (18) autour de l'axe de rotation (19) et la courbe étant divisée de manière logique pour l'évaluation en une pluralité de quadrants (Q1 à Q4) ; de préférence de même taille;
un compte-tours (76) destiné à mémoriser le nombre des tours à 360 ° entièrement passés de l'arbre capteur (18) ;
**caractérisé par** une mémoire d'historique (78), dans laquelle, en fonctionnement est mémorisée une historique de valeurs de quadrants (Q1 à Q4) ; et
l'unité d'évaluation (15) étant adaptée :
pour dériver à partir de la valeur de signal (Px1, Px2) fournie l'un des quadrants (Q1 à Q4) dans lequel se situe la valeur de signal (Px1, Px2) fournie et pour fournir à la mémoire d'historique (78) une valeur de quadrant correspondante pendant que l'une des impulsions (52) d'inversion magnétique se produit.

2. Capteur de rotation (10) multi-tours selon la revendication 1, le capteur d'impulsion étant un capteur de Wiegand.

3. Capteur de rotation (10) multi-tours selon l'une quelconque des revendications 1 ou 2, le capteur (14) de champ magnétique étant de valeur ohmique élevée et étant un élément xMR, notamment un élément TMR, un élément AMR ou un élément GMR.

4. Capteur de rotation (10) multi-tours selon l'une quelconque des revendications 1 à 3, qui comporte par ailleurs un redresseur (64).

5. Capteur de rotation (10) multi-tours selon l'une quelconque des revendications 1 à 4, l'aimant excitateur (16) étant un aimant permanent, notamment un dipôle qui est fixé de préférence en étant centré sur l'arbre capteur (18).

6. Capteur de rotation (10) multi-tours selon l'une quelconque des revendications 1 à 5, le capteur d'impulsion (12) et le capteur (14) de champ magnétique étant placés de manière coaxiale par rapport à l'arbre capteur (18) et à l'aimant excitateur (16), que le capteur d'impulsion (12) et le capteur (14) de champ magnétique sont opposés à l'aimant excitateur (16) avec un écart en direction axiale lorsque l'arbre capteur (18) est assemblé avec le capteur de rotation (10) multi-tours.

7. Capteur de rotation (10) multi-tours selon l'une quelconque des revendications 1 à 6, n impulsions (52) d'inversion magnétique étant générées pour chacun des tours à 360 ° de l'arbre capteur (18) et chaque n^{ième} impulsion (52) d'inversion magnétique d'un cycle d'impulsion produisant une mise à jour d'une valeur de la mémoire du compte-tours (76).

8. Capteur de rotation (10) multi-tours selon l'une quelconque des revendications 1 à 7, une orientation du capteur (14) de champ magnétique par rapport au fil métallique à impulsion étant choisi de telle sorte que les impulsions (52) d'inversion magnétique se situent chaque fois sensiblement au centre dans les quadrants (Q1 à Q4) correspondants.

9. Capteur de rotation (10) multi-tours selon l'une quelconque des revendications 1 à 8, qui comporte par ailleurs un accumulateur d'énergie (66) qui est électriquement relié avec le capteur d'impulsions (12) et qui est chargé uniquement avec de l'énergie récupérée à partir des impulsions (52) d'inversion magnétique.

10. Procédé destiné à déterminer une position explicite d'un arbre capteur (18) qui tourne autour d'un axe de rotation (19) au moyen d'un capteur de rotation (10) multi-tours autonome en énergie qui est installé pour détecter un nombre de tours à 360 ° entièrement passés de l'arbre capteur (18) en rotation, ainsi que pour détecter un angle de rotation absolu, qui indique une position (P) à résolution fine à l'intérieur d'un tour à 360 ° de l'arbre capteur (18) sur lequel est fixé de manière solidaire en rotation un aimant excitateur (16) destiné à générer un champ magnétique (40) externe qui est utilisé au moins pour une détermination de la position à résolution fine, le capteur de rotation (10) multi-tours comportant un capteur d'impulsion (12), un accumulateur d'énergie (66), un capteur (14) de champ magnétique, un compte-tours (76) et une unité d'évaluation (15), le capteur (14) de champ magnétique fournissant un signal (51) avec une courbe de préférence sinusoïdale lorsque l'aimant excitateur (16) tourne en continu avec l'arbre capteur (18) autour de l'axe de rotation (19) et la courbe étant divisée de manière logique pour l'évaluation en une pluralité de quadrants (Q1 à Q4), de préférence de même taille, **caractérisé par** une mémoire d'historique (78), le procédé comportant les étapes suivantes :
mémorisation d'un historique de valeurs de quadrants (Q2, Q4) dans la mémoire d'historique, chaque valeur de quadrant (Q2, Q4) correspondant à une impulsion (52) d'inversion magnétique qui est déclenchée dans le capteur d'impulsion (12) par une modification spécifique du champ magnétique (40) externe, du fait d'une rotation de l'arbre capteur (18), et chaque valeur de quadrant étant déterminée par l'unité d'évaluation (15), sous considération d'une valeur de signal (Px1, Px2) qui est fournie à l'unité d'évaluation (15) par le capteur (14) de champ magnétique, sur la base de l'impulsion (52) d'inversion magnétique, et étant fournie à la mémoire d'historique (78), n impulsions (52) d'inversion magnétique étant générées pour chacun des tours à 360 ° de l'arbre capteur (18) et chaque n^{ième} impulsion (52) d'inversion magnétique produisant une mise à jour du compte-tours sous la forme d'une incrémentation ou décrémentation en fonction du sens de rotation d'une valeur du compte-tours par l'unité d'évaluation (15) ; et
pendant une période qui comprend un instant discret pour lequel il faut déterminer la position (Px1, Px2) explicite de l'arbre capteur (18), réalisation des étapes suivantes :
alimentation de l'unité d'évaluation (15) et du capteur (14) de champ magnétique avec une énergie externe ;
détection d'une intensité du champ magnétique (40) externe à l'instant discret au moyen du capteur (14) de champ magnétique et fourniture à l'unité d'évaluation (15) de la valeur de signal (Px1, Px2) correspondante ;
détermination au moyen de l'unité d'évaluation (15), dans lequel des quadrants (Q3, Q4) se situe la valeur de signal (Px1, Px2) fournie ;
interrogation par l'unité d'évaluation (15) de la dernière valeur de quadrant (Q2) qui a été mémorisée en dernier lieu dans l'historique de la mémoire d'historique ;
vérification par l'unité d'évaluation (15) si la valeur de signal (Px1, Px2) fournie se situe à l'intérieur d'une zone de quadrant (Z1, Z2) interdite qui est associée à la valeur de quadrant (Q2) qui a été mémorisée en dernier lieu, pour chaque valeur de quadrant (Q2, Q4) étant déterminée préalablement et sauvegardée une zone de quadrant (Z1, Z2, Z3, Z4) spécifique interdite ;
si la valeur de signal (Px1, Px2) fournie se situe à l'extérieur de la zone de quadrant (Z1, Z2) interdite, détermination de la position explicite par totalisation de l'angle de rotation absolu, qui correspond à la valeur de signal (Px1, Px2) fournie, avec une valeur actuelle du compte-tours ; ou
dans le cas contraire, si la valeur de signal (Px1, Px2) fournie se situe à l'intérieur de la zone de quadrant (Z1, Z2) interdite, évaluation d'un signal supplémentaire qui est généré en sus par le capteur d'impulsion (12), correction de la valeur du compte-tours au moyen de l'unité d'évaluation (15), sur la base du signal supplémentaire et détermination de l'angle de rotation absolu sur la base du signal supplémentaire avant que la position explicite soit déterminée à partir de l'angle de rotation absolu et de la valeur corrigée du compte-tours.

11. Procédé selon la revendication 10, les zones de quadrant (Z1, Z2) spécifiques interdites étant sauvegardées dans une mémoire de l'unité d'évaluation (15) ou dans un élément de mémoire (74) séparé.

12. Procédé selon l'une quelconque des revendications 10 ou 11, le capteur d'impulsion (12) comportant un fil métallique d'impulsion (36) de préférence unique et une bobine (38) de préférence unique qui entoure le fil métallique d'impulsion (36), le fil métallique d'impulsion (36) comportant une enveloppe (46) extérieure et une âme (48) placée à l'intérieur de l'enveloppe (46).

13. Procédé selon la revendication 12, des limites extérieures des zones de quadrant (Z1, Z2) interdites étant définies par des seuils d'amorçage (54) d'inversion magnétique de l'âme (48).

14. Procédé selon l'une quelconque des revendications 10 à 13, le capteur d'impulsion (12) comportant un fil métallique d'impulsion (36) de préférence unique et une bobine (38), de préférence unique qui entoure le fil métallique d'impulsion (36) et l'étape de l'évaluation du signal supplémentaire et de la correction de la valeur du compte-tours comportant :
alimentation électrique de la bobine (38) sur une brève période, de sorte qu'un champ magnétique supplémentaire se superpose au champ magnétique (40) externe de l'aimant excitateur (16) et de ce fait une impulsion d'inversion magnétique de test puisse être générée dans le fil métallique d'impulsion (36) qui ensuite peut être mesurée avec la bobine (38), une existence ou inexistence de l'impulsion d'inversion magnétique de test étant fournie par la bobine (38) à l'unité d'évaluation (15) en tant que signal supplémentaire ;
vérification par l'unité d'évaluation (15), si le signal supplémentaire contient ou non l'impulsion d'inversion magnétique ; et
correction de la valeur du compte-tours (76) si le signal supplémentaire contient l'impulsion d'inversion magnétique de test ; ou maintien de la valeur actuelle du compte-tours si le signal supplémentaire ne contient pas l'impulsion d'inversion magnétique de test.

15. Procédé selon la revendication 14, l'étape de la correction de la valeur du compte-tours (76) comportant une incrémentation ou décrémentation en fonction du sens de rotation de la valeur du compte-tours (76) actuel.

16. Procédé selon l'une quelconque des revendications 10 à 15, le capteur d'impulsions (12) comportant un premier fil métallique d'impulsion (36-1), au moins un deuxième fil métallique d'impulsion (36-2), un corps d'enroulement (80) dans lequel sont placés les fils métalliques d'impulsion (36-1, 36-2), ainsi qu'une bobine (38), de préférence unique, qui quant à elle entoure le corps d'enroulement (80), chacun des fils métalliques d'impulsion (36-1, 36-2) comportant une enveloppe (46) extérieure et une âme (48) placée à l'intérieur de l'enveloppe (46) et les fils métalliques d'impulsion (36) étant fixés dans une position respective prédéfinie dans le corps d'enroulement (80).

17. Procédé selon l'une quelconque des revendications 10 à 16, des limites extérieures de la zone de quadrant (Z1, Z2, Z1', Z2') respectivement interdite étant définies par des seuils d'amorçage (54) d'inversion magnétique des âmes (48).

18. Procédé selon la revendication 16, les impulsions d'inversion magnétique (52, 52') du deuxième fil métallique d'impulsion (36-2) étant utilisées en tant que signal supplémentaire.

19. Procédé selon la revendication 16, les fils métalliques d'impulsion (36-1, 36-2) étant écartés les uns des autres en direction axiale de l'arbre capteur (18) et étant placés de préférence les uns par rapport aux autres en étant parallèles à l'axe.

20. Procédé selon la revendication 16, les fils métalliques d'impulsion (36-1, 36-2) étant placés dans un plan unique qui est orienté sensiblement à la perpendiculaire de l'axe de rotation (19) de l'arbre capteur (18) et le premier fil métallique d'impulsion (36-1) incluant un angle avec chacun des deuxièmes fils métalliques d'impulsion (36-2).

21. Procédé selon la revendication 16, le capteur d'impulsion (12) étant placé de manière coaxiale par rapport à l'aimant excitateur (16), les fils métalliques d'impulsion (36-1, 36-2) étant placés dans au moins un plan qui est à chaque fois orienté sensiblement à la perpendiculaire de l'axe de rotation (19) de l'arbre capteur (18) et sensiblement à la parallèle du plan de rotation (34) de l'aimant excitateur (16).

22. Procédé selon l'une quelconque des revendications 10 à 21, l'aimant excitateur (16) étant un aimant dipolaire unique qui est placé dans un plan (34) qui est orienté sensiblement à la perpendiculaire de l'axe de rotation (19).

23. Procédé selon l'une quelconque des revendications 10 à 22, le capteur d'impulsion (12) étant placé de manière excentrique par rapport à l'axe de rotation (19) de l'arbre capteur (18), à côté de l'aimant excitateur (16) placé de manière coaxiale étant prévus au moins quatre aimants supplémentaires qui peuvent être fixés dans la direction périphérique avec des champs magnétiques orientés en alternance en étant distribués régulièrement sur l'arbre capteur (18), de sorte que dans chaque quadrant (Q1 à Q4) soit générée au moins une impulsion d'inversion magnétique (52, 52'), de telles impulsions d'inversion magnétique qui diffèrent des impulsions d'inversion magnétique usuelles fournissant le signal supplémentaire.

24. Procédé selon la revendication 23, le nombre des aimants supplémentaires étant défini par 2ⁿ, n étant un nombre entier qui est supérieur à 2.

25. Capteur de rotation (10') multi-tours autonome en énergie destiné à détecter un nombre de tours complets à 360 ° d'un arbre capteur (18) qui tourne autour d'un axe de rotation (19) et sur lequel est fixé de manière solidaire en rotation un aimant excitateur (16) destiné à générer un champ magnétique (40) externe et sur lequel est fixé un disque codeur (104) optique pour déterminer un angle de rotation absolu qui indique une position à résolution fine à l'intérieur d'un tour à 360 ° de l'arbre capteur (18), le capteur de rotation (10) multi-tours comportant, pour la détection autonome en énergie du nombre des tours complets à 360 ° de l'arbre capteur (18) :
un capteur d'impulsion (12), de préférence unique, destiné à générer de l'énergie à partir d'une impulsion d'inversion magnétique (52) qui est provoquée dans le capteur d'impulsion (12) par une modification suffisamment importante d'une intensité du champ magnétique (40) externe, la modification d'intensité de champ magnétique étant provoquée par une rotation (20) de l'aimant excitateur (16) ;
une unité d'évaluation (15), qui pour déterminer le nombre des tours à 360 ° entièrement passés de l'arbre capteur (18) fonctionne uniquement avec de l'énergie qui est récupérée à partir des impulsions (52) d'inversion magnétique ;
un capteur optique (14' ; 100) de préférence unique, destiné à détecter une position actuelle de l'arbre capteur (18) et à générer un signal correspondant, dont la valeur de signal correspond à la position actuelle de l'arbre capteur (18) et peut être fournie à l'unité d'évaluation (15), le signal (51) ayant une courbe de préférence sinusoïdale lorsque l'aimant excitateur (16) tourne en continu avec l'arbre capteur (18) autour de l'axe de rotation (19), et la courbe étant divisée de manière logique pour l'évaluation en une pluralité de quadrants (Q1 à Q4), de préférence de même taille ;
un compte-tours (76) destiné à mémoriser le nombre des tours à 360 ° entièrement passés de l'arbre capteur (18) ;
**caractérisé par** une mémoire d'historique (78), dans laquelle, en fonctionnement, est mémorisée un historique de valeurs de quadrants (Q1 à Q4) ;
l'unité d'évaluation (15) étant adaptée pour dériver à partir de la valeur de signal (Px1, Px2) fournie l'un des quadrants (Q1 à Q4) dans lequel se situe la valeur de signal (Px1, Px2) fournie et pour fournir à la mémoire d'historique (78) une valeur de quadrant correspondante pendant que l'une des impulsions (52) d'inversion magnétique intervient.

26. Capteur de rotation (10') multi-tours selon la revendication 25, le capteur optique (100) comportant une LED et une bascule de Schmitt.

27. Capteur de rotation (10') multi-tours selon l'une quelconque des revendications 25 ou 26, le capteur d'impulsion étant un capteur (12) à fil métallique d'impulsion qui comporte au moins un fil métallique d'impulsion (36) et une bobine (38) qui entoure l'au moins un fil métallique (36).

28. Capteur de rotation (10') multi-tours selon l'une quelconque des revendications 25 à 27, qui comporte par ailleurs un disque codeur (104 ; 104') à codage absolu qui peut être fixé de manière solidaire en rotation sur l'arbre capteur (18) de rotation.

29. Capteur de rotation (10') multi-tours selon l'une quelconque des revendications 25 à 28, qui comporte par ailleurs un registre (110) pour la mémorisation d'un signal de sortie (S-Sig) du capteur optique (14' ; 100).

30. Procédé destiné à déterminer une position explicite d'un arbre capteur (18) qui tourne autour d'un axe de rotation (19) au moyen d'un capteur de rotation (10) multi-tours autonome en énergie qui est conçu de préférence selon l'une quelconque des revendications 25 à 29 et qui est installé pour la détection optique d'un nombre de tours à 360 ° entièrement passés de l'arbre capteur (18) en rotation, ainsi que pour la détection optique d'un angle de rotation absolu, qui indique une position (P) à résolution fine à l'intérieur d'un tour à 360 ° de l'arbre capteur (18), sur lequel est fixé de manière solidaire en rotation un aimant excitateur (16) destiné à générer un champ magnétique (40) externe, lequel est utilisé pour générer une énergie qui est nécessitée pour le comptage des tours, le capteur de rotation (10') multi-tours comportant un capteur d'impulsion (12), un capteur optique (14', 100), un compte-tours (76) et une unité d'évaluation (15), le capteur optique (14', 100) fournissant un signal (51) avec une courbe de préférence sinusoïdale lorsque l'arbre capteur (18) tourne en continu autour de l'axe de rotation (19) et la courbe étant divisée de manière logique pour l'évaluation en une pluralité de quadrants (Q1 à Q4), de préférence de même taille , **caractérisé par** une mémoire d'historique (78), le procédé comportant les étapes suivantes :
mise à disposition à un instant t1 d'une énergie d'évaluation lorsqu'une impulsion d'inversion magnétique (52) est générée dans le capteur d'impulsion ;
activation de l'unité d'évaluation (15) et du capteur optique (100) à un instant t2, immédiatement après que l'énergie d'évaluation est disponible ;
ensuite, détection d'une valeur optique qui est générée par une illumination du disque codeur (104) et délivrance d'un signal (S-Sig) correspondant ;
détermination et édition par l'unité d'évaluation (15) d'un quadrant actuel qui correspond au signal (S-Sig) délivré dans lequel a eu lieu l'impulsion d'inversion magnétique (52) ;
activation de l'élément de mémoire (74) et mise à jour d'un historique de quadrants qui comporte des valeurs de quadrants mémorisées en dernier lieu; et
désactivation de l'unité d'évaluation (15), après que toutes les étapes précédemment mentionnées aient été réalisées et avant que l'impulsion d'inversion magnétique (52) décroisse.

31. Procédé selon la revendication 30, qui comporte par ailleurs :
la mise à l'arrêt du capteur optique (100), après que le signal (S-Sig) correspondant a été généré et délivré.

32. Procédé selon la revendication 30 ou la revendication 31, qui comporte par ailleurs :
l'allumage d'une source lumineuse (102) après que l'unité d'évaluation (15) et le capteur optique (100) ont été activés et extinction de la source lumineuse (102) lorsque le signal (S-Sig) correspondant a été déterminé.

33. Procédé selon l'une quelconque des revendications 30 à 32, le capteur optique (100) comportant une photodiode (106) et une bascule de Schmitt.
